# EUROPEAN PATENT APPLICATION

(11) **EP 2 712 190 A1**
(43) Date of publication of application: **26.03.2014**
(21) Application number: 12790243.5
(22) Date of filing: 18.05.2012
(51) Int. Cl.: H04N 7/173, G06F 13/00, H04H 60/13, H04H 60/43

(54) **BROADCAST COMMUNICATION COOPERATIVE RECEPTION DEVICE**

(30) Priority: 20.05.2011 JP 2011114061; 20.05.2011 JP 2011114063
(71) Applicant: Nippon Hoso Kyokai, Tokyo 150-8001 (JP)
(72) Inventor: TAKECHI Masaru, Tokyo 157-8510 (JP); MITSUYA Shigeaki, Tokyo 157-8510 (JP); MATSUMURA Kinji, Tokyo 157-8510 (JP); BABA Akitsugu, Tokyo 157-8510 (JP); FUJISAWA Hiroshi, Tokyo 157-8510 (JP); KANATSUGU Yasuaki, Tokyo 157-8510 (JP); HAMADA Hiroyuki, Tokyo 157-8510 (JP)
(74) Representative: Tomlinson, Kerry John
(86) International application number: PCT/JP2012/062805
(87) International publication number: WO 2012/161120

(57) **Abstract**

Provided is a broadcast communication cooperative reception device which controls the activation of applications associated with sub-channels. A broadcast communication cooperative reception device (400) is provided with: an APL activation information extraction means (402a) for extracting application activation information; an APL activation information storage means (407) for storing application activation information in association with a sub-channel of an event information channel; an activation control means (409a) for activating an application, the activation of said application being instructed by a control code of the application activation information corresponding to the sub-channel; and a termination control means (409b) for causing the application to terminate, the termination of said application being instructed by the control code.

## Description

### Technical Field

The present invention relates to an integrated broadcasting communications receiver that controls activation of application, integrating broadcasting and communication. The present application claims the priority of Japanese Patent Application No. 2011-114061 and Japanese Patent Application No. 2011-114063 filed on May 20, 2011 in Japan, the contents of which are incorporated herein by reference.

### Background Art

Accompanying the development of digitalization of broadcast and broadbandization of communication in recent years, research and development for realization of integrated broadcasting communications services including European HbbTV (Hybrid Broadcast Broadband TV) are carried out.

As a technology that realizes such a conventional integrated broadcasting communications service, there are known technologies to control activation of an application that operates on a receiver by a broadcast wave (broadcast signal) transmitted from a broadcast station (see Patent 1, Non-Patent document 1).

Particularly, in the technology described in Patent Document 1, an application information table (AIT) is multiplexed into a broadcast TS (Transport Stream) in a section format as an elementary stream (ES) forming a broadcast program to be thus transmitted to receivers. Herein, AIT is data that specifies an application and includes additional information for controlling the application.

On the other hand, a receiver separates and extracts the AIT from the received broadcast wave (broadcast signal), and controls the transition of the life cycle of an application (the process from when the application is loaded until the application is terminated) specified by the AIT, based on control information (control code), such as activation (AUTOSTART), termination (KILL), or the like that is described in the AIT.

In such a manner, in a conventional technology, a transmitting device of digital broadcast multiplexes the ES of an AIT into a broadcast TS and notifies a receiver of an application by an event information table (EIT) so that the receiver can control the activation of the application linked with a broadcast program or an allocated channel.

### Related Art Documents

### Patent Document

Patent Document 1: Japanese Patent Application Laid-Open No. 2010-166335

### Non-patent Document

Non-patent Document 1: Pages 39-54 of APPLICATION EXECUTION ENGINE PLATFORM. FOR DIGITAL BROAD CASTING. ARIB STANDARD. ARIB STD-B23 Version 1.2, Association of Radio Industries and Businesses, July 29, 2009

### Disclosure of the Invention

### Problems to be Solved by the Invention

However, as it is necessary to multiplex an AIT as an ES into a broadcast TS, it is not possible to use an existing multiplexing device without a change as it is on a broadcast station side, and it is necessary to carry out extensive modification to add a configuration for multiplexing the AIT to the multiplexing device. Further, for example, in a case that the number of ESs is limited for operation, there is also a problem that it is difficult to add an AIT as an ES.

The present invention has been developed to solve such problems, and an object of the invention is to provide an integrated broadcasting communications receiver capable of controlling activation of an application linked with an allocated channel, without extensive modification of an existing multiplexing device.

### Means for Solving the Problems

The present invention has been developed to solve the above-described problem. First, the integrated broadcasting communications receiver of claim 1, the receiver having a broadcast receiving unit for receiving broadcast data via a broadcast wave and a communication transmitting/receiving unit for transmitting/receiving communication data via a communication line, and the receiver controlling activation of an application linked with an allocated channel for broadcast, includes an application activation information extracting unit, an application activation information storing unit, an application obtaining unit, an application execution unit, an activation controlling unit, and a termination controlling unit.

With this configuration, by the application activation information extracting unit, the integrated broadcasting communications receiver extracts application activation information including an address specifying the location of an application and a control code for controlling the activation of the application from an event information table (EIT) included in broadcast data received via the broadcast receiving unit. Herein, as the EIT is associated with a specific allocated channel, the integrated broadcasting communications receiver is notified of an application linked with the allocated channel, by the broadcast station.

Then, the integrated broadcasting communications receiver stores the application activation information in the application activation information storing unit, associating the application activation information with the allocated channel in the event information table.
Thus, the integrated broadcasting communications receiver can manage an application, linking the application with an allocated channel.

Then, on the integrated broadcasting communications receiver, the activation controlling unit controls the application obtaining unit to obtain, from the address described in the application activation information, the application on which activation has been instructed by the control code in the application activation information associated with an allocated channel that is currently or presently selected, the application activation information being stored in the application activation information storing unit, and the application execution unit activates the application.

Then, on the integrated broadcasting communications receiver, the termination controlling unit controls the application execution unit to terminate the application on which termination has been instructed by the control code.

Thus, on the integrated broadcasting communications receiver, activation or termination of the application is controlled by an instruction from the broadcast station, in association with the current allocated channel.

Further, the integrated broadcasting communications receiver of claim 2 is according to the integrated broadcasting communications receiver of claim 1, wherein the application activation information is added to a descriptor area of the event information table, as an application activation information descriptor, and wherein the application activation information extracting unit extracts the application activation information from the application activation information descriptor added to the descriptor area.

With this configuration, by the application activation information extracting unit, the integrated broadcasting communications receiver extracts application activation information by detecting the presence of an application activation information descriptor among plural descriptors in the description area of an event information table.

Further, the integrated broadcasting communications receiver of claim 3 is according to the integrated broadcasting communications receiver of claim 1, wherein the event information table is a p/f EIT, and wherein the application activation information extracting unit extracts the application activation information from the p/f EIT of the broadcast data.

With this configuration, by the application activation information extracting unit, the integrated broadcasting communications receiver can obtain application activation information of an application linked with an allocated channel, by a p/f EIT that the integrated broadcasting communications receiver is notified of, as information of a program of the current broadcast and the next scheduled program.

Still further, the integrated broadcasting communications receiver of claim 4, the receiver having a broadcast receiving unit for receiving broadcast data via a broadcast wave and a communication transmitting/receiving unit for transmitting/receiving communication data via a communication line, and the receiver controlling activation of an application linked with an allocated channel for broadcast, includes an application activation information extracting unit, an application activation information storing unit, an application obtaining unit, an application execution unit, an activation controlling unit, and a termination controlling unit.

With this configuration, by the application activation information extracting unit, the integrated broadcasting communications receiver extracts application activation information, which includes an address specifying the location of an application and a control code for controlling the activation of the application, from the data of a data carousel specified by a component tag and a module which are predetermined and included in broadcast data received via the broadcast receiving unit. Herein, as the data carousel is associated with a specific allocated channel, the communication transmitting/receiving unit is notified of an application linked with an allocated channel, by the broadcast station.

Then, the integrated broadcasting communications receiver stores the application activation information in the application activation information storing unit, associating the application activation information with the allocated channel in the data carousel. Thus, the integrated broadcasting communications receiver can manage an application, linking the application with an allocated channel.

Then, on the integrated broadcasting communications receiver, the activation controlling unit controls the application obtaining unit to obtain, from the address described in the application activation information, the application on which activation has been instructed by the control code in the application activation information associated with an allocated channel that is currently selected, the application activation information being stored in the application activation information storing unit, and the application execution unit activates the application.

Then, on the integrated broadcasting communications receiver, the termination controlling unit controls the application execution unit to terminate the application on which termination has been instructed by the control code. Thus, on the integrated broadcasting communications receiver, activation or termination of the application is controlled by an instruction from the broadcast station, in association with the current allocated channel.

Further, the integrated broadcasting communications receiver of claim 5 is according to the integrated broadcasting communications receiver of claim 1 or 4, wherein the integrated broadcasting communications receiver further includes an activated application identification information storing unit.

With this configuration, by the activated application identification information storing unit, the integrated broadcasting communications receiver stores identification information for identifying an application activated in linkage with an allocated channel, associating the identification information for identifying an application with the allocated channel. Thus, the application associated with the current allocated channel is managed by identification information.

Then, on the integrated broadcasting communications receiver, when the allocated channel has been switched, the termination controlling unit controls the application execution unit to terminate the application in association with the allocated channel before the switching, the application being stored in the activated application identification information storing unit. Thus, on the integrated broadcasting communications receiver, activation or termination of an application is controlled, in association with the current allocated channel.

Still further, the integrated broadcasting communications receiver of claim 6 is according to the integrated broadcasting communications receiver of claim 1 or 4, wherein the integrated broadcasting communications receiver further includes a list displaying unit and a list selecting unit.

With this configuration, by the list displaying unit, the integrated broadcasting communications receiver displays a list of applications on which activatability is instructed by a control code, with reference to the application activation information in association with the currently selected allocated channel, the application activation information being stored in the application activation information storing unit. Thus, the integrated broadcasting communications receiver can present a user with candidate applications that can be activated in association with the current allocated channel.

Then, by the list selecting unit, the integrated broadcasting communications receiver instructs the activation controlling unit to activate an application selected from the list displayed by the list displaying unit. Thus, an application linked with the current allocated channel can be activated by a user instruction.

Yet further, the integrated broadcasting communications receiver of claim 7 is according to the integrated broadcasting communications receiver of claim 1 or 4, wherein the integrated broadcasting communications receiver further includes an activated application identification information storing unit.

With this configuration, by the activation controlling unit, the integrated broadcasting communications receiver writes, in the activated application identification information storing unit, a piece of identification information for identifying a parent application, which is an application activated in association with an allocated channel, and a piece of identification information for identifying a child application, which is a child application activated by the parent application itself, wherein the pieces of identification information are made linked with each other. Then, on the integrated broadcasting communications receiver, when the termination controlling unit terminates the parent application activated in association with the allocated channel, the activation controlling unit terminates the child application linked with the parent application. Thus, an application activated by another application itself can be managed as an application linked with an allocated channel.

### Advantages of the Invention

The present invention has the following excellent advantages.

According to the invention described in claims 1 and 2, a broadcast transmitting apparatus of a broadcast station can transmit application activation information for controlling the activation of an application, by an existing event information table linked with an allocated channel. Thus, a slight modification of existing broadcast facility in the broadcast station enables control of activation of an application linked with an allocated channel on an integrated broadcasting communications receiver, from the broadcast side.

According to the invention described in claim 3, the broadcast transmitting apparatus of a broadcast station can notify the integrated broadcasting communications receiver of application activation information by a p/f EIT. This can be attained by a slight modification of existing broadcast facility of the broadcast station. Further, as a p/f EIT is in a smaller data amount compared with a schedule EIT, it is possible to notify an integrated broadcasting communications receiver of application activation information, without compressing a broadcast band.

According to the invention described in claim 4, a broadcast transmitting apparatus of a broadcast station can transmit application activation information for controlling the activation of an application, by an existing data carousel linked with an allocated channel. Thus, a slight modification of existing facility of the broadcast station enables control of activation of an application linked with an allocated channel on an integrated broadcasting communications receiver, from the broadcast station side.

According to the invention described in claim 5, by terminating an application associated with a previous allocated channel when the allocated channel is switched, it is possible to ensure the control of activation of an application associated with the allocated service of a currently selected channel.

According to the invention described in claim 6, it is possible to present an application associated with a currently selected allocated channel to a user, and the user can activate the application at an arbitrary timing during when the allocated channel is selected.

According to the invention described in claim 7, even if a child application is activated by another application itself, the child application can be managed as an application linked with the same allocated channel as the parent application. Thus, when the allocated channel has been switched, the child application can be terminated together with the termination of the parent application linked with this allocated channel.

### Brief Description of the Drawings

FIG. 1 is a block diagram showing the entire configuration of an integrated broadcasting communications system in an embodiment according to the present invention;
FIG. 2 is a block diagram showing the configuration of an integrated broadcasting communications receiver in a first embodiment;
FIG. 3 is a data structure diagram for illustration of the structure of an EIT;
FIG. 4 is a data structure diagram for illustration of an example where application activation information is described by a binary-format application activation information descriptor of the EIT;
FIG. 5 is a diagram showing the contents of control codes (application control codes) described in application activation information;
FIG. 6 is a diagram for illustration of data stored in an application activation information storing unit;
FIG. 7 illustrates a method of managing identification information stored in an activated application identification information storing unit;
FIG. 8 is a flowchart showing the activation/termination operation of an application by application activation information, on the integrated broadcasting communications receiver in the first embodiment;
FIG. 9 is a flowchart showing in detail the termination operation in the operation in FIG. 8;
FIG. 10 is a flowchart showing the switching operation of an allocated channel on the integrated broadcasting communications receiver in the first embodiment;
FIG. 11 is a flowchart showing the operation of obtaining application activation information of a non-channel-associated application, which is not linked with an allocated channel on the integrated broadcasting communications receiver in the first embodiment;
FIG. 12 is a flowchart showing the reserving operation of a non-associated application that is not linked with an allocated channel on the integrated broadcasting communications receiver in the first embodiment;
FIG. 13 is a flowchart showing the operation of activating an application upon instruction by a user on the integrated broadcasting communications receiver in the first embodiment;
FIG. 14 is a block diagram showing the configuration of an integrated broadcasting communications receiver in a second embodiment;
FIG. 15 is a data structure diagram for illustration of the structure of a DII message in a data carousel;
FIG. 16 is a data structure diagram for illustration of the structure of a Type descriptor in the DII message;
FIG. 17 is a data structure diagram for illustration of the structure of a DDB message in a data carousel;
FIG. 18 is a data structure diagram for illustration of an example where application activation information is described in a text format;
FIG. 19 is a block diagram showing the configuration of an integrated broadcasting communications receiver in a third embodiment;
FIG. 20 is a data structure diagram for illustration of an example where application activation information with added channel identification information is described in a text format;
FIG. 21 is a data structure diagram for illustration of channel identification information (bound service descriptor) that is added in describing the application activation information in a binary format; and
FIG. 22 is a block diagram showing the configuration of an integrated broadcasting communications receiver in a fourth embodiment.

### Embodiments for Carrying Out the Invention

Embodiments of the present invention will be described below, referring to the drawings.

### [Configuration of Integrated Broadcasting Communications System]

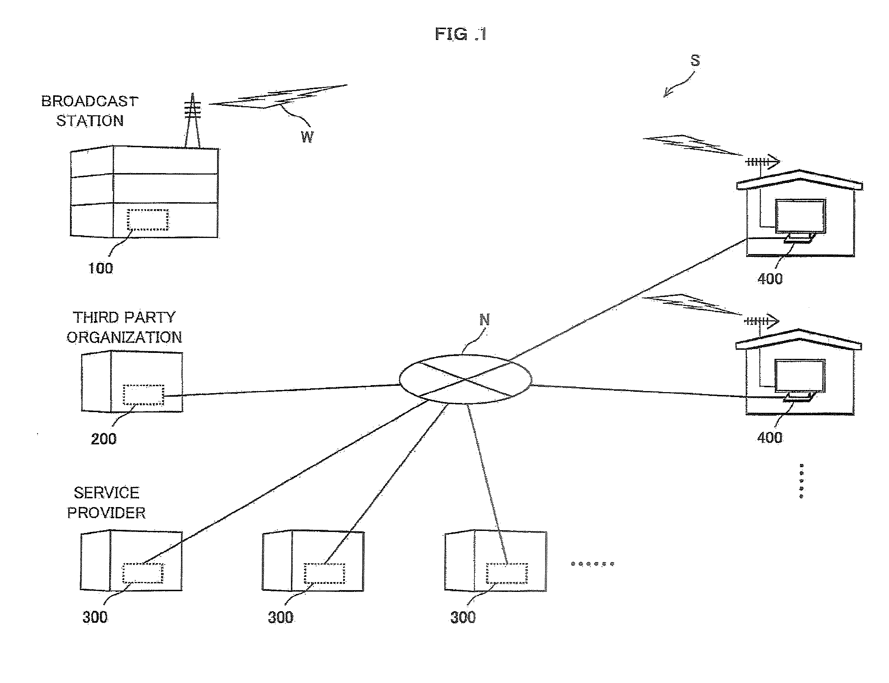

First, the configuration of an integrated broadcasting communications system will be described, referring to FIG. 1.

An integrated broadcasting communications system S is a system that integrates broadcasting with communication, and presents applications (channel-associated applications) operating in linkage with an allocated channel to users (viewers).

Of course, the integrated broadcasting communications system S also presents applications (non-channel-associated application) that are not linked with an allocated channel.

Herein, an application refers to software that operates on later-described integrated broadcasting communications receivers 400 as execution environment.

This integrated broadcasting communications system S is configured in such a manner that a broadcast transmitting apparatus 100, an application activation information server 200, an application servers 300, and integrated broadcasting communications receivers 400 are connected via a communication line N.

Incidentally, the communication line N may be either a wired line or a wireless line.

The broadcast transmitting apparatus 100 is installed at a broadcast station and transmits broadcast programs (contents) based on program allocation, or program information related to broadcast programs via a broadcast wave W to integrated broadcasting communications receivers 400.

Further, the broadcast transmitting apparatus 100 transmits broadcast wave W to the integrated broadcasting communications receivers 400, adding application activation information that is necessary for controlling an application associated with an allocated channel.

Herein, application activation information refers to an identifier (ID) of an application, information for specifying the application, such as the location of the application and the like, and additional information for controlling this application. Application activation information will be described later in detail.

Incidentally, herein, the broadcast transmitting apparatus 100 will be described in an embodiment in which a broadcast program or the like is transmitted as the broadcast wave W, however, a broadcast program or the like may be transmitted via a cable (not shown) or the communication line N.

The application activation information server 200 is a server that provides application activation information. The application activation information server 200 manages application activation information that is not transmitted from the broadcast station.

The application activation information server 200 is installed at an authentication organization (a third party organization) that verifies applications created in advance, for example, by service providers and holds only application activation information corresponding to applications (A [Authorized] application) that have been authorized.
Or, the application activation information server 200 may be one that also holds application activation information corresponding to applications (general applications) having been created by service providers (including general users) and having not been authorized by an authentication organization.

The application servers 300 are servers for providing applications created by service providers. Herein, an application server 300 is assumed to be held by an individual service provider, however, may also be installed otherwise at the broadcast station or a third party organization.

An application reserved in such an application server 300 is downloaded by an integrated broadcasting communications receiver 400 and is executed.

The integrated broadcasting communications receiver 400 presents a broadcast program to a user, and operates an application (channel-associated-application) linked with an allocated channel or an application (non-channel-associated application) not linked with an allocated channel to thus present the application to the user. The configuration and the operation of the integrated broadcasting communications receiver 400 will be described later in detail.

By configuring the integrated broadcasting communications system S in such a manner, it is possible for a user, on an integrated broadcasting communications receiver 400, to view a broadcast program provided by the broadcast station and operate an application (a channel-associated application, a non-channel-associated application) provided by a service provider or the like.

The configuration and operation of integrated broadcasting communications receivers 400 will be described below by examples of various embodiments.

### <First Embodiment>

### [Configuration of Integrated Broadcasting Communications Receiver]

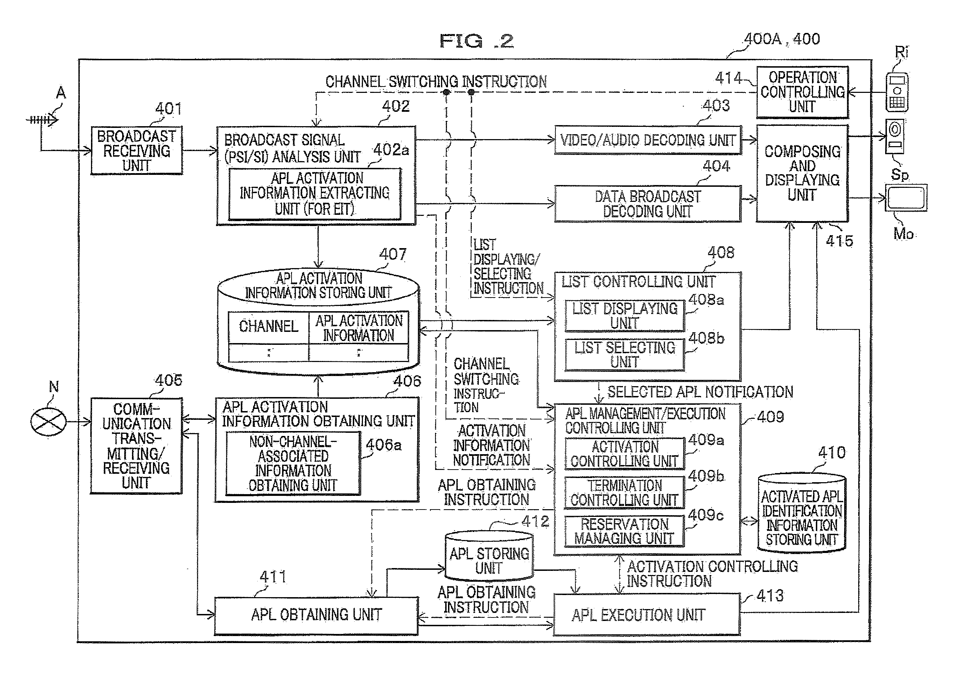

First, referring to FIG. 2 (FIG. 1 for system configuration), the configuration of an integrated broadcasting communications receiver 400A (400) in the first embodiment will be described.

The integrated broadcasting communications receiver 400A in the first embodiment recognizes an application, the application being linked with an allocated channel, by application activation information located in an event information table (EIT) in a signal of digital broadcast transmitted via broadcast wave W.

Herein, the integrated broadcasting communications receiver 400A includes a broadcast receiving unit 401, a broadcast signal analysis unit 402, a video/audio decoding unit 403, a data broadcast decoding unit 404, a communication transmitting/receiving unit 405, an application activation information obtaining unit 406, an application activation information storing unit 407, a list controlling unit 408, an application management/execution controlling unit 409, an activated application identification information storing unit 410, an application obtaining unit 411, an application storing unit 412, an application execution unit 413, an operation controlling unit 414, and a composing and displaying unit 415.
Incidentally, in the figure, solid arrows represent the flows of data, and dashed arrows represent the flows of control signals.

The broadcast receiving unit 401 receives, via an antenna A, broadcast data (broadcast signal) transmitted as broadcast wave W. The broadcast receiving unit 401 receives and demodulates broadcast data, performs error correction and decoding, such as TMCC (Transmission and Multiplexing Configuration Control) decoding, and outputs a result as a transport stream (TS) of MPEG2 to the broadcast signal analysis unit 402.

Incidentally, the broadcast receiving unit 401 is not limited to a unit that receives a broadcast signal by radio wave via antenna A, and may be a unit that receives a broadcast signal via a cable. Or, the broadcast receiving unit 401 may be a unit that receives a broadcast signal as communication data.

The broadcast signal analysis unit 402 analyzes PSI/SI (Program Specific Information/ Service Information) in the stream data (transport stream) demodulated by the broadcast receiving unit 401, and extracts data including video, audio, data for a currently selected allocated channel. Incidentally, channel selection is performed, based on a channel switching instruction made from the later-described operation controlling unit 414.

The broadcast signal analysis unit 402 outputs data in a PES (Packetized Elementary Stream) format, which is extracted data of video, audio, or the like, to the video/audio decoding unit 403, and outputs data in a section format, which is extracted data of data broadcast and the like, to the data broadcast decoding unit 404.

The broadcast signal analysis unit 402 is herein provided with an application activation information extracting unit 402a.

From the stream data demodulated by the broadcast receiving unit 401, the application activation information extracting unit 402a extracts application activation information that is included in the descriptor (application activation information descriptor) of EIT, which is a part of SI (Service Information). This EIT is created by that the broadcast transmitting apparatus 100 (see FIG. 1) writes in application activation information corresponding to an application linked with an allocated channel into the descriptor area of the EIT by a program information writing unit, not shown, of the broadcast transmitting apparatus 100.

The application activation information extracting unit 402a writes the extracted application activation information into the application activation information storing unit 407, associating the application activation information with information (channel identification information) that specifies an allocated channel specified by the EIT.

Further, when the application activation information extracting unit 402a has extracted application activation information, the application activation information extracting unit 402a notifies the application management/execution controlling unit 409 of the fact that application activation information has been informed (activation information notification) together with information for identifying an application (Application ID).

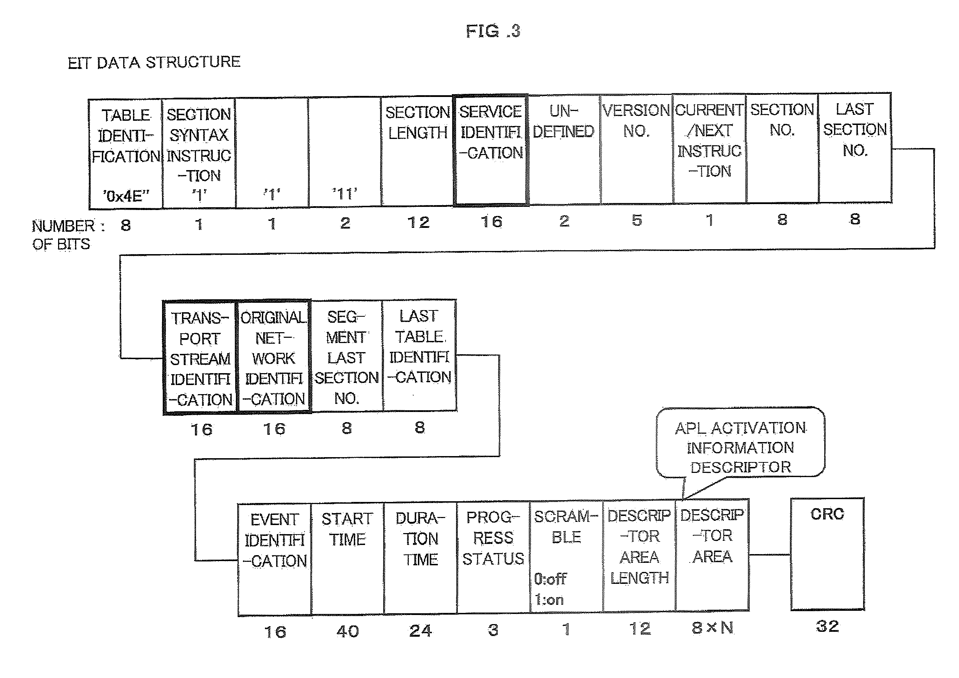

Referring to FIG. 3, an example of a data structure of EIT in which application activation information is written in will be described below. FIG. 3 shows an example in which application activation information is added to EIT which is specified ARIB STD-B10. Herein, application activation information is added to the descriptor area of EIT as 'application activation information descriptor'.

This EIT is time-series information of events included in an allocated-channel service.
Incidentally, as this EIT, it is preferable to use a p/f EIT ('table identification' = 0 x 4E) that represents a table in which current (present)/ next (following) event information is added to the transport stream thereof. Thus, without changing the structure of an existing EIT, it is possible to transmit application activation information to the integrated broadcasting communications receiver 400, in a data amount smaller than the data amount of a schedule EIT that transmits an EIT for all broadcast stations.

Further, as shown in FIG. 3, depending on 'original network identification', 'transport stream identification', or 'service identification' of the data structure of EIT, an allocated channel corresponding to transmitted application activation information is specified.
'Original network identification' is an identifier for identifying a broadcast network for digital terrestrial broadcasting or BS digital broadcasting. 'Transport stream identification' is an identifier for identifying a transport stream (TS). 'Service identification' is an identifier for identifying an allocated channel of an individual transport stream.

By adding application activation information (application activation information descriptor) to EIT in such a manner, it is possible to recognize application activation information linked to an allocated channel on the integrated broadcasting communications receiver 400. As other data in the data structure of EIT is specified byARIB STD-B10, description will be omitted here.

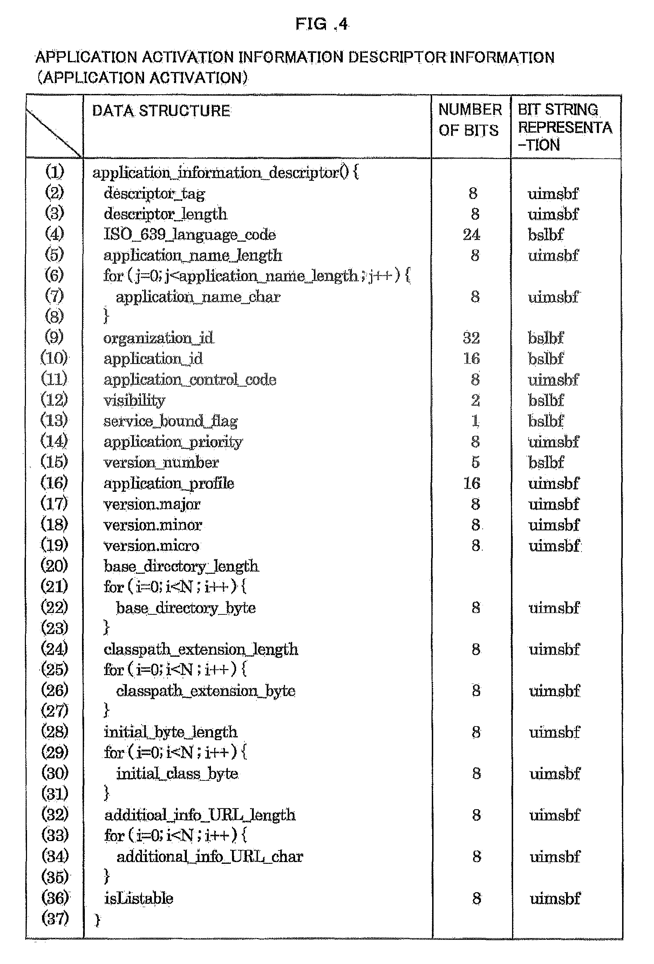

In the following, referring to FIG. 4, the contents of application activation information (application activation information descriptor) added to EIT will be described. FIG. 4 shows an example of a descriptor (application activation information descriptor) describing application activation information in binary format.

An application activation information descriptor is data including information for specifying an application and additional information for controlling the application, and is information corresponding to a conventional AIT.

Information for specifying an application includes following information.

For example, in FIG. 4, an application name is described on lines (5) to (8). Further, the number for identifying the organization that has created the application is described on line (9) and the number having been uniquely set to specify the application in the organization is described on line (10). These numbers described on lines (9) and (10) are the application ID that uniquely specifies an application.

Further, the location (address) of the application is described in a combination of lines (20) to (23) and lines (28) to (31). Still further, in addition to these, additional information used by the application, for example, the location (address) of metadata, image data and the like may be described as shown on lines (32) to (34). In such a manner, the data amount added to the EIT can be reduced by describing the location of additional data to be referred to.

Additional information for control of the application includes information as follows.

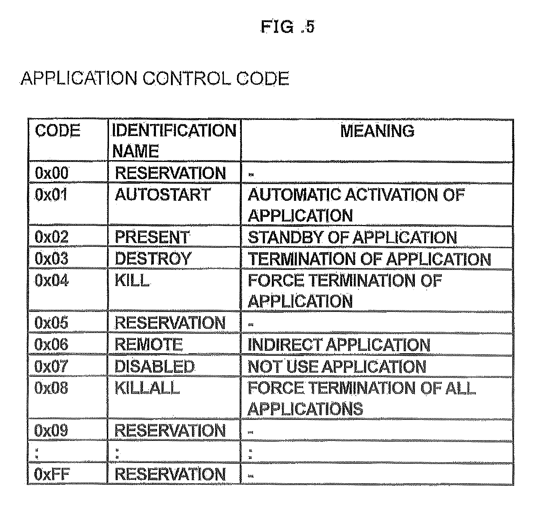

For example, a control code (application control code) for control of the state of the application is described on line (11) in FIG. 4.
An application control code herein takes a value, for example, shown in FIG. 5. An application control code herein is basically similar to one specified by ARIB STD-B23. For example, 'AUTOSTART' represents an application that automatically starts (immediately starts) on the integrated broadcasting communications receiver 400 not by user operation. Further 'PRESENT' represents that, though not an application that automatically starts, the application is in a state of allowing activation (standby).

Further, 'DESTROY' and 'KILL' are control codes to instruct termination of application, and respectively represent normal termination (for example, termination by user confirmation) and force termination (for example, immediate termination without user confirmation).

In such a manner, an application control code herein is basically similar to one specified by ARIB STD-B23, however, 'KILLALL' is further added here. 'KILLALL' represents force termination of all applications that are currently in activation on the integrated broadcasting communications receiver 400, without limiting to the application corresponding to an allocated channel.

Further, on line (36) in FIG. 4, described is information (a listable flag [isListable]) that represents whether or not the present application can be displayed by a user as a candidate of list display. For example, if this isListable flag is TRUE ('1'), the isListable flag represents an application executable by user selection. If this isListable flag is FALSE ('0'), the isListable flag represents that the present application is not an application executed by user selection but an application activated from another application (for example, a decoder).

Returning to FIG. 2, the configuration of the integrated broadcasting communications receiver 400A. will be continuously described.

The video/audio decoding unit 403 decodes video/audio (video stream and audio stream) extracted by the broadcast signal analysis unit 402.
In case that video/audio data is encoded, for example, by a coding scheme of MPEG2, the video/audio decoding unit 403 performs decoding of MPEG2 and outputs the video/audio data as video/audio data in a displayable output format to the composing and displaying unit 415.

The data broadcast decoding unit 404 decodes the data of data broadcast extracted by the broadcast signal analysis unit 402. The data broadcast decoding unit 404 has the function of a BML browser to analyze BML (Broadcast Markup Language) and converts the BML into a displayable output format, and outputs the converted display data (data broadcast data) to the composing and displaying unit 415.

The communication transmitting/receiving unit 405 receives an application and data such as application activation information via the communication line N.

The application activation information obtaining unit 406 obtains application activation information via the communication transmitting/receiving unit 405. Herein, the application activation information obtaining unit 406 is provided with a non-channel-associated information obtaining unit 406a.

The non-channel-associated information obtaining unit 406a obtains, via the communication transmitting/receiving unit 405, application activation information on application (non-channel-associated application) that is not linked with an allocated channel.

From a predetermined server (application activation information server 200 (see FIG. 1)), for example, at the time of startup (time of power turning ON), the non-channel-associated information obtaining unit 406a obtains application activation information with the same content as that of the application activation information descriptor described above with reference to FIG. 4, and writes and stores the obtained application activation information into the application activation information storing unit 407. Or, application activation information may be obtained when an instruction has been transmitted by the user via the later-described operation controlling unit 414 to display the list of applications (list display instruction).

Incidentally, this obtained application activation information is not linked with an allocated channel. In this situation, the non-channel-associated information obtaining unit 406a is assumed to write and store application activation information into the application activation information storing unit 407, associating the application activation information with a virtual channel that does not exist as a real allocated channel.

The application activation information storing unit 407 stores application activation information, associating it with information (channel identification information) for specifying a channel (an allocated channel or a virtual channel), and is a storage medium of a semiconductor memory or the like. Herein, the application activation information extracting unit 402a writes extracted application activation information into the application activation information storing unit 407, associating the application activation information with an allocated channel specified by EIT. Further, the non-channel-associated information obtaining unit 406a, not shown, writes obtained application activation information into the application activation information storing unit 407, associating the application activation information with a virtual channel.

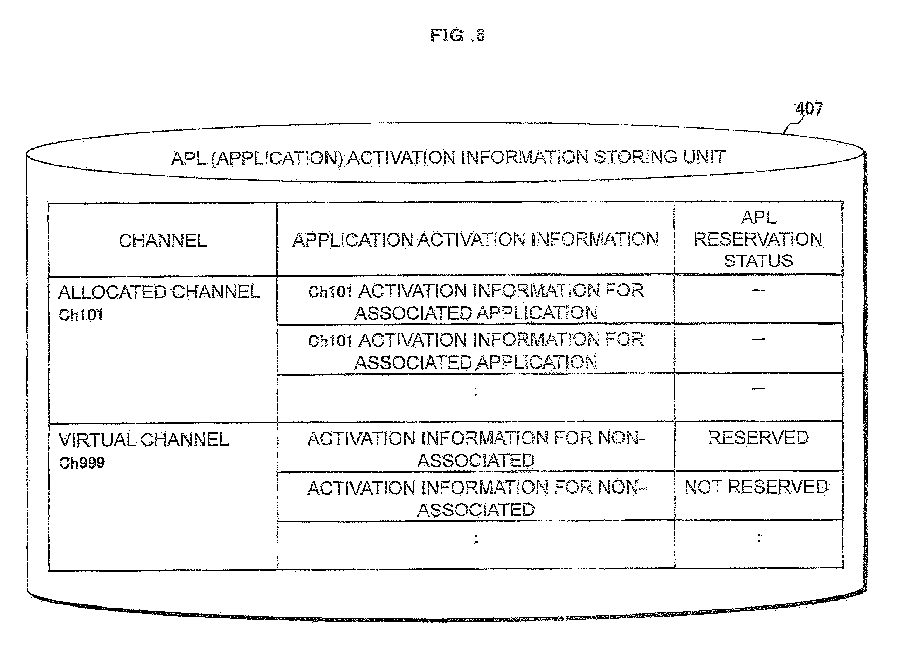

Herein, referring to FIG. 6, an example of data structure stored in the application activation information storing unit 407 will be described. As shown in FIG. 6, the application activation information storing unit 407 stores pieces of application activation information, associating them with respective channels. For example, if the currently selected allocated channel is Ch101, the application activation information storing unit 407 stores application activation information (activation information for Ch101-associated application) linked with this Ch101, associating the application activation information with Ch101.

Incidentally, this allocated channel Ch101 is more concretely a value formed by the values of the respective identifiers for 'original network identification', 'transport stream identification', and 'service identification' described with reference to FIG. 3.

Further, the application activation information storing unit 407 stores application activation information (activation information for non-associated-application) not linked with an allocated channel, associating a predetermined value, which does not exists as an allocated channel, with a virtual channel Ch999.

Thus, an application that is not linked with an allocated channel can also be managed, similarly to an application linked with an allocated channel.

Incidentally, herein, it is assumed that 'APL (application) reservation status' is stored in the application activation information storing unit 407. This application reservation status is information indicating whether or not an application is reserved ('reserved' or 'not reserved') in later-described application storing unit 412, and is written by a later-described reservation managing unit 409c.

Returning to FIG. 2, the structure of the integrated broadcasting communications receiver 400A will be continuously described.

The list controlling unit 408 is a launcher that controls displaying of a list of applications that can be activated and selecting an application. Herein, the list controlling unit 408 includes a list displaying unit 408a and a list selecting unit 408b.

The list displaying unit 408a displays a list of applications that can be activated.
Upon instruction by the user via the operation controlling unit 414 to display a list, this list displaying unit 408a creates a list of applications corresponding to the respective pieces of application activation information stored in the application activation information storing unit 407, and outputs the list to the composing and displaying unit 415 as display data.

This list displaying unit 408a displays, for example, application names described on lines (5) to (8) of the application activation information described above with reference to FIG. 4.

Incidentally, the list displaying unit 408a is assumed to display only a list of applications whose listable flag (isListable) is TRUE ('1') in the application activation information described above with reference to FIG. 4. Thus, the list of applications can be displayed, excluding applications that cannot be activated by a user.

Further, the list selecting unit 408b selects an application, based on a list selection instruction from the user via the operation controlling unit 414, from a list of applications displayed by list displaying unit 408a. For example, by being notified of a press-down signal of a direction (arrow) button (not shown) on a remote control device Ri as a list selection instruction via the operation controlling unit 414, the list selecting unit 408b recognizes which application is selected as an activation candidate from plural applications. Then, by being notified of a press-down signal of a decision button (not shown), the list selecting unit 408a recognizes the application on which an activation instruction has been actually selected.

The list selecting unit 408b outputs a selected application notification including a number (application ID) for identifying a selected application, to the application management/execution controlling unit 409.

Incidentally, it is assumed that, in selecting an application from a list, the application being not linked with an allocated channel, the list selecting unit 408b prompts a user to select whether to immediately execute the application or to select either reserving (installing) or not reserving the application in the integrated broadcasting communications receiver 400A (concretely, the application storing unit 412).

In this case, the list selecting unit 408b may be provided with check columns on the displayed list of applications to instruct immediate execution or either reserving or not reserving the application. Or, inquiry may be made to the user when an application has been selected. Information indicating immediate execution and whether or not to reserve this application is assumed to be output to the application management/execution controlling unit 409 together with a selected application notification.

The application management/execution controlling unit 409 controls the life cycle of an application (the process from loading an application, through execution, and until termination). Herein, the application management/execution controlling unit 409 includes an activation controlling unit 409a, a termination controlling unit 409b, and a reservation managing unit 409c.

The activation controlling unit 409a controls activation of an application linked with an allocated channel (channel-associated application) and activation of an application not linked with an allocated channel (non-channel-associated application).

Concretely, upon reception of an activation information notification from the application activation information extracting unit 402a, the activation controlling unit 409a activates an application if the application control code described in application activation information corresponding to the application ID transmitted together with the activation information notification is 'AUTOSTART', the application activation information being stored in the application activation information storing unit 407.

That is, when the application control code is 'AUTOSTART', the activation controlling unit 409a notifies the application execution unit 413 of an instruction to execute this application (activation control instruction). This application activation instruction includes information for specifying an application described in the application activation information (application ID, location, etc.).

Thus, an application linked with an allocated channel can be automatically activated without user operation.

Further, upon reception of a selected application notification from the list controlling unit 408, the activation controlling unit 409a notifies the application execution unit 413 of an instruction to execute this application (activation control instruction), regardless of the value of the application control code. Thus, the application selected by the user from the list is activated.

Incidentally, the activation controlling unit 409a is assumed to manage an application in activation by identification information (application ID) and write the application ID in activation into the activated application identification information storing unit 410. Further, in case that an application has activated another application (child application) by the application execution unit 413, if the parent application is linked with an allocated channel, the activation controlling unit 409a manages these applications, making the applications in hierarchal association, taking that the child application is also linked with the same allocated channel. In this situation, for management of the child application by the activation controlling unit 409a, for example, the activation controlling unit 409a may be notified, by the parent application, of identification information on the activated child application together with identification information on the parent application itself, or may be notified, by the activated child application, of the identification information on the child application itself together with the identification information on the parent application.

The termination controlling unit 409b performs termination control of an application in activation.

Concretely, upon reception of an activation information notification from the application activation information extracting unit 402a, the termination controlling unit 409b terminates an application if the application control code described in application activation information corresponding to the application ID, which the termination controlling unit 409b is notified of together with the activation information notification, is 'DESTROY', 'KILL', or 'KILLALL', the application activation information being stored in the application activation information storing unit 407.

If the application control code is 'DESTROYT', the termination controlling unit 409b instructs the application execution unit 413 to normally terminate the application corresponding to the application ID that the termination controlling unit 409b has been informed of. If the application control code is 'KILL', the termination controlling unit 409b instructs the application execution unit 413 to perform force termination of the application corresponding to the application ID that the termination controlling unit 409b has been notified of.

Incidentally, when terminating an application, the termination controlling unit 409b refers to the activated application identification information storing unit 410. If child applications are present on the application having been instructed to be terminated, the activation controlling unit 409b also terminates all the child applications.

Further, if the application control code is 'KILLALL', the termination controlling unit 409b refers to the activated application identification information storing unit 410, and terminates all applications that are currently activated. That is, if the application control code is 'KILLALL', the termination controlling unit 409b instructs the application execution unit 413 to forcibly terminate all applications including, in addition to the application ID on which the termination controlling unit 409b has been notified of KILLALL', other applications in activation in association with allocated channel, and applications in activation not in association with an allocated channel.

Incidentally, when the termination controlling unit 409b has terminated an application, the termination controlling unit 409b deletes identification information (application ID) corresponding to this application from the activated application identification information storing unit 410.

Thus, for example, in case it is intended to broadcast contents to be emergently send to users (viewers), such as emergency warning broadcast or emergency earthquake bulletin, the broadcaster notifies the integrated broadcasting communications receivers 400 of application activation information in which 'KILLALL' is described as an application control code so that priority use of resources such as a display screen can be made in emergency.

Further, in case that an application in activation is terminated, the termination controlling unit 409b refers to the activated application identification information storing unit 410, upon reception of a notification of the termination of the application, for example, by user operation, from the application execution unit 413. If child applications are present on the application having been terminated, the activation controlling unit 409b also terminates the child applications.

Further, in case that the termination controlling unit 409b is notified of a channel switching instruction via the operation controlling unit 414, the termination controlling unit 409b terminates an application that is activated in linkage with the channel before the switching.

The reservation managing unit 409c controls reservation of an application in advance inside the integrated broadcasting communications receiver 400 (concretely the application storing unit 412).

Concretely, together with information for specifying an application (application ID) selected by the user from a list of applications that can be activated, when the reservation managing unit 409c is notified, from the list selecting unit 408b, that the selected application is to be reserved in the application storing unit 412, the reservation managing unit 409c notifies the application obtaining unit 411 that the application obtaining unit 411 is instructed to obtain the application from the location of the application described in the application activation information and write the application into the application storing unit 412 (an application obtaining instruction).

Thus, the application selected by the user is reserved in the application storing unit 412.

Incidentally, when the reservation managing unit 409c has reserved (installed) an application in the application storing unit 412, the reservation managing unit 409c updates the location (address) of the application in the application activation information stored in the application activation information storing unit 407, the application activation information corresponding to this application, such that the address (local address) in the application storing unit 412 is referred to.

For example, the reservation managing unit 409c converts the address notation of an application described as 'http://∼' in the application activation information into 'file:///∼' or the like so as to indicate a local address in the application storing unit 412 (address in the application storing unit 412). Of course, instead of directly changing the application activation information, a conversion rule may be separately described, being associated with the application activation information, such that the address in this application activation information is referred to with reading conversion.

Further, it is assumed that, when the reservation managing unit 409c has reserved (installed) an application in the application storing unit 412, the reservation managing unit 409c writes the state that the application is reserved in the application activation information storing unit 407 and thus performs management (see FIG. 6).

On the other hand, the reservation managing unit 409c deletes a reserved application, according to an instruction by the user. That is, an application stored in the application storing unit 412 is displayed in a list by reserved application displaying unit (not shown) in the reservation managing unit 409c, and deleted from the application storing unit 412 by an application selecting/deleting unit (not shown), according to a selection by the user. Herein, the application selecting/deleting unit (not shown) makes the corresponding application reservation status be 'not reserved' in the application activation information storing unit 407.

With such a configuration of the application management/execution controlling unit 409, activation/termination of an application (channel-associated application) linked with an allocated channel service can be controlled by application activation information that the integrated broadcasting communications receivers 400 is notified of by the broadcast station. Further, an application (non-channel-associated application) not linked with an allocated channel can be obtained/executed by the user at an arbitrary timing.

The activated application identification information storing unit 410 stores identification information (application ID) of an application in activation, and is a storage medium, such as a semiconductor memory. The activation controlling unit 409a writes an application ID into the activated application identification information storing unit 410 when an application is activated, and the termination controlling unit 409b deletes the application ID from the activated application identification information storing unit 410 when the application is terminated.

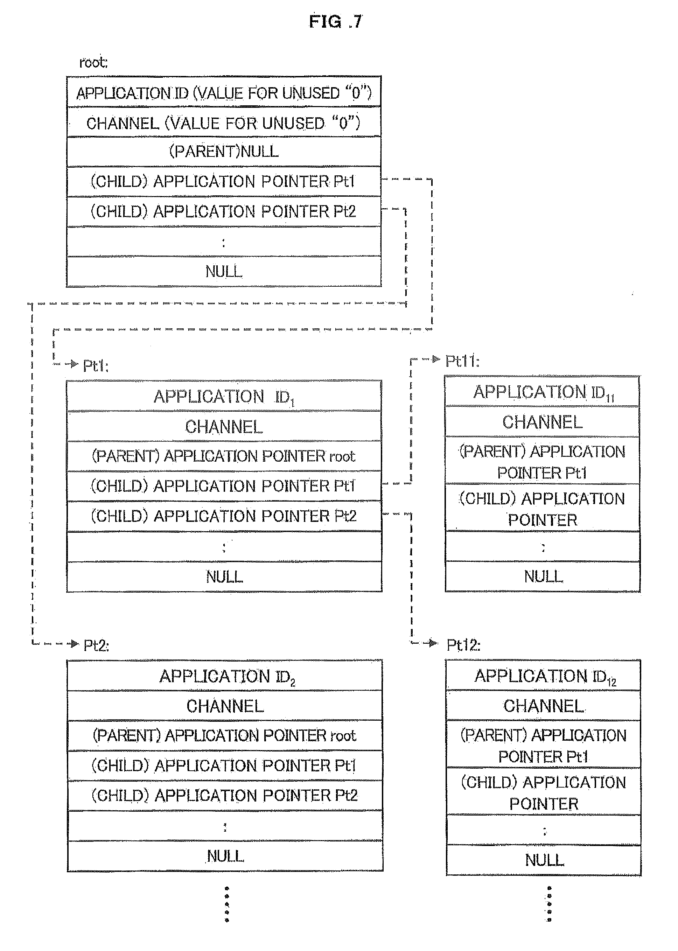

Herein, an example of a method of managing application IDs stored in the activated application identification information storing unit 410 will be described, referring to FIG. 7 (also FIG. 2, as appropriate). The storage content, shown in FIG. 7, in the activated application identification information storing unit 410 is an example of management by sequentially connecting child applications in a list format from a virtual application at the root.

As shown in FIG. 7, herein, one application is managed by a structure formed by an information ID, a channel, a pointer representing a structure of a parent application, and pointers representing the structures of child applications.

For example, in the structure represented by the pointer of root, when an application is activated, the activated application is managed as a child application of the application (a virtual application) at the root. For example, when an application of a certain application ID1 is activated, the activation controlling unit 409a creates a structure (pointer Pt1) of application ID1, and sets the pointer representing the structure of the parent application to root. On the other hand, in the structure represented by the root pointer, the pointer representing the structure of the child application is set to Pt1.

Similarly, also at each time another application is activated, a structure of the newly activated application is sequentially set in the structure represented by root pointer.

Incidentally, when an application activates another application as a child thereof, for example, when the application (application ID1) shown by the structure with pointer Pt1 has activated a child application (application ID11), the activation controlling unit 409a creates a structure (pointer Pt11) of the child application (application ID 11), having the application (application ID1) shown by the structure with pointer Pt1 be the parent application. In such a manner, at each time a child application is activated, the activation controlling unit 409a sequentially connects structures by pointers, and thereby manages the activated application as applications associated with the same channel.

Further, when an application with a certain application ID has been terminated, the termination controlling unit 409b deletes the structure of the application corresponding to this application ID, and sets NULL on the structure of the parent application.

Thus, activated applications are managed in a tree-shaped form, with the structure of the root application as a basis.

Returning to FIG. 2, description of the configuration of the integrated broadcasting communications receiver 400A will be continued.

The application obtaining unit 411 obtains an application via the communication transmitting/receiving unit 405 from an application server 300 (see FIG. 1) connected to the communication line N.

When the application obtaining unit 411 is notified of an application obtaining instruction from the activation controlling unit 409a, the application obtaining unit 411 obtains a designated application from the location (address), of the application, that the application obtaining unit 411 is notified of by this instruction, and outputs the obtained application to the application execution unit 413.

When the application obtaining unit 411 is notified of an application obtaining instruction from the reservation managing unit 409c, the application obtaining unit 411 obtains a designated application from the location (address), of the application, that the application obtaining unit 411 is notified of by this instruction, and writes and reserves the obtained application into the application storing unit 412.

The application storing unit 412 stores applications obtained by the application obtaining unit 411, and is a storage medium, such as a hard disk. The application storing unit 412 reserves a non-channel-associated application not linked with an allocated channel so as to operate the application at an arbitrary timing.

An application stored in the application storing unit 412 is read out and executed by the application execution unit 413.

The application execution unit 413 performs activation and termination of an application, based on an instruction (activation control instruction) from the application management/execution controlling unit 409.

When the application execution unit 413 is instructed by the activation controlling unit 409a to execute an application that the application execution unit 413 is notified of, the application execution unit 413 obtains the application and data (for example, metadata, icon date, etc.), which is necessary in executing the application, from the source of obtaining the application, based on information (application ID, location, etc.) that identifies the application included in the activation control instruction.

Then, the application execution unit 413 loads the application in a memory, not shown, and executes the application.

Incidentally, if the source of obtaining the application included in the activation control instruction is an address in a local disk (application storing unit 412) such as 'file:///∼', the application execution unit 413 reads out the application from the application storing unit 412 and executes the application. If the source of obtaining the application included in the activation control instruction is an address on a network such as 'http://∼', the application execution unit 413 instructs the application obtaining unit 411 to obtain this application (application obtaining instruction), thereby obtains the application, and activates the application.

Display data accompanying the execution operation of this application is output to the composing and displaying unit 415.

Further, when the application execution unit 413 is instructed by the termination controlling unit 409b to terminate an application that the application execution unit 413 is notified of, the application execution unit 413 terminates the instructed application.

Incidentally, the application execution unit 413 transmits a notification from the termination controlling unit 409b to the application in activation, for example, by an interruption signal or the like whether to normally terminate or to forcibly terminate the application, and thus terminates the application.

The operation controlling unit 414 controls user operation (for example, channel change, etc.) on the integrated broadcasting communications receiver 400, via an input unit such as an external remote control device Ri or the like.

When the operation controlling unit 414 is instructed by the user via the remote control device Ri to change the channel, the operation controlling unit 414 notifies the broadcast signal analysis unit 402 of a channel switching instruction including the channel number of the selected channel.

Thus, the channel currently viewed is changed. Further, the operation controlling unit 414 likewise notifies the application management/execution controlling unit 409 of a channel switching instruction.
Thus, it is possible to execute activation or termination of an application associated with an allocated channel.

The composing and displaying unit 415 synthesizes video and audio and thus performs displaying. The composing and displaying unit 415 synthesizes video data/audio data decoded by the video/audio decoding unit 403, display data of data broadcast decoded by the data broadcast decoding unit 404, display data of a list created by the list controlling unit 408, and display data of an application created by the application execution unit 413, and displays data composed by the synthesizing.

Incidentally, the composing and displaying unit 415 outputs synthesized or composed audio as an audio signal to an audio output device such as a speaker Sp connected outside, and outputs synthesized or composed video (image) as a video signal to a video display device such as a liquid crystal display Mo connected outside.

With such a configuration as has been described above, the integrated broadcasting communications receiver 400A can execute a channel-associated application linked with an allocated channel during viewing by the user of a broadcast program, associating broadcast and communication, and can execute a non-channel-associated application not linked with an allocated channel at an arbitrary timing by an instruction by the user.

In such a manner, the integrated broadcasting communications receiver 400A can add and transfer application activation information as a descriptor, without multiplexing application activation information as an independent ES, and without changing the structure of an existing EIT.

### [Operation of Integrated Broadcasting Communications Receiver]

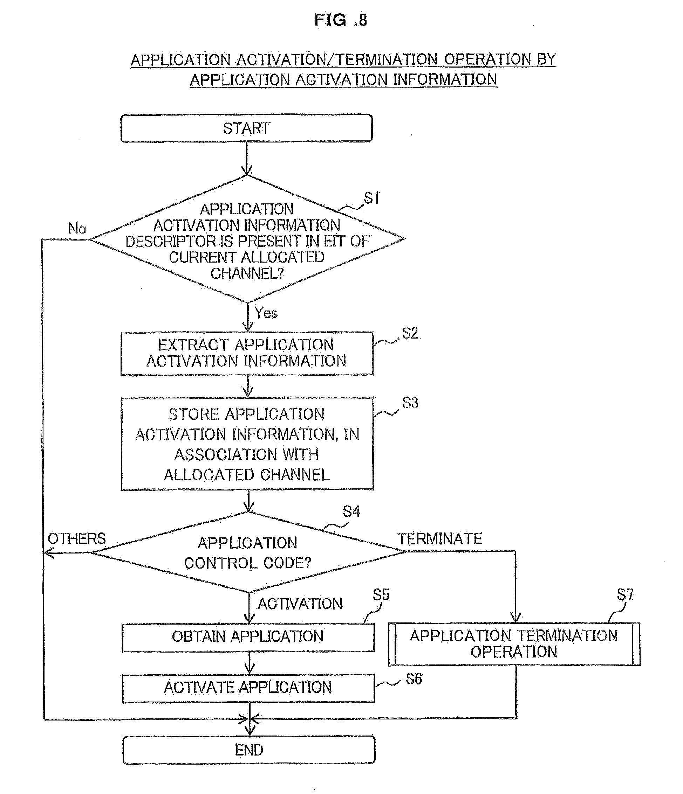

In the following, referring to FIGS. 8 to 13, the operation of an integrated broadcasting communications receiver 400A (400) in the first embodiment will be described.

### [Application Activation/Termination Operation]

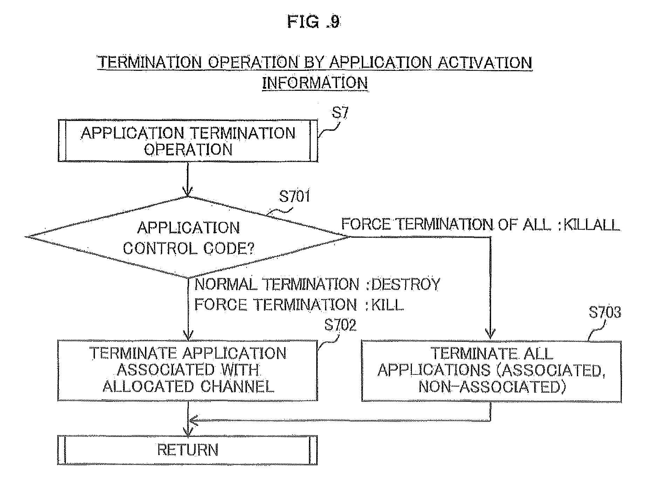

First, referring to FIG. 8 and FIG. 9 (FIG. 2 for configuration, as appropriate), the operation, on the integrated broadcasting communications receiver 400A, of activating or terminating an application by application activation information will be described.

As shown in FIG. 2, the integrated broadcasting communications receiver 400A analyzes, by the broadcast signal analysis unit 402, stream data received and decoded by the broadcast receiving unit 401, and determines whether or not the integrated broadcasting communications receiver 400A has been notified of application activation information, depending whether or not an application activation information descriptor is present in EIT corresponding to an allocated channel currently selected (step S1).

If the integrated broadcasting communications receiver 400A has been notified of application activation information (Yes in step S1), the application activation information extracting unit 402a extracts the application activation information from EIT (step S2), and stores the extracted application activation information into the application activation information storing unit 407, associating the application activation information with the allocated channel specified by the EIT (step S3).

On the other hand, if application activation information is not present in EIT (No in step S1), the integrated broadcasting communications receiver 400A terminates activation/termination operation of application that is designated by EIT, and continues analysis operation of broadcast signal (not shown as a step).

Then, the integrated broadcasting communications receiver 400A makes the application activation information extracting unit 402a notify the application management/execution controlling unit 409 of having received application activation information (activation information notification), and analyzes the control code (application control code) of the application activation information by the activation controlling unit 409a (step S4).

Herein, if the application control code is a code representing activation ('AUTOSTART') ('activation' in step S4), the integrated broadcasting communications receiver 400A obtains, by the application obtaining unit 411 and via the communication transmitting/receiving unit 405, an application that the broadcast/communication linking receiver apparatus 400A has been notified of by the application activation information (step S5). Then, upon an instruction (activation control instruction) from the activation controlling unit 409a, the integrated broadcasting communications receiver 400A activates, by the application execution unit 413, the application obtained in step S5 (step S6).

On the other hand, if the application control code is a code representing termination ('KILL' or the like) ('termination' in step S4), the integrated broadcasting communications receiver 400A terminates, by the termination controlling unit 409b, application executed by the application execution unit 413 (step S7).

Incidentally, if the application control code is not a code representing activation or termination ('others' in step S4), the integrated broadcasting communications receiver 400A terminates activation/termination operation of application according to EIT and continues analysis operation of broadcast signal (not shown as a step).

Herein, referring to FIG. 9, the application termination operation in step S7 will be further described.

As shown in FIG. 9, in step S7 in FIG. 8, the integrated broadcasting communications receiver 400A further determines on the application control code by the termination controlling unit 409b (step S701). Herein, if the application control code represents normal termination ('DESTROY') or force termination ('KILL'), the termination controlling unit 409b instructs the application execution unit 413 to perform normal termination or force termination and thus terminates an application (step S702).

Herein, if child applications are present in the activated application identification information storing unit 410 for the application on which termination has been instructed, the termination controlling unit 409b performs control to terminate all the child applications.

On the other hand, if the application control cord represents force termination of all ('KILLALL'), the termination controlling unit 409b instructs the application execution unit 413 to forcibly terminate not only an application corresponding to an allocated channel but also all applications that are stored in the activated application identification information storing unit 410 and are currently activated, and thus performs control to terminate all applications (step S703).

By the operation described above referring to FIG. 8 and FIG. 9, on the integrated broadcasting communications receiver 400A, it is possible to activate or terminate an application, the application being linked with an allocated channel, from the broadcast station side by application activation information that the integrated broadcasting communications receiver 400A is notified of by EIT. Further, even an application that is not linked with an allocated channel can be forcibly terminated in case a resource such as a display screen is necessary for emergency broadcast.

### [Allocated Channel Switching Operation]

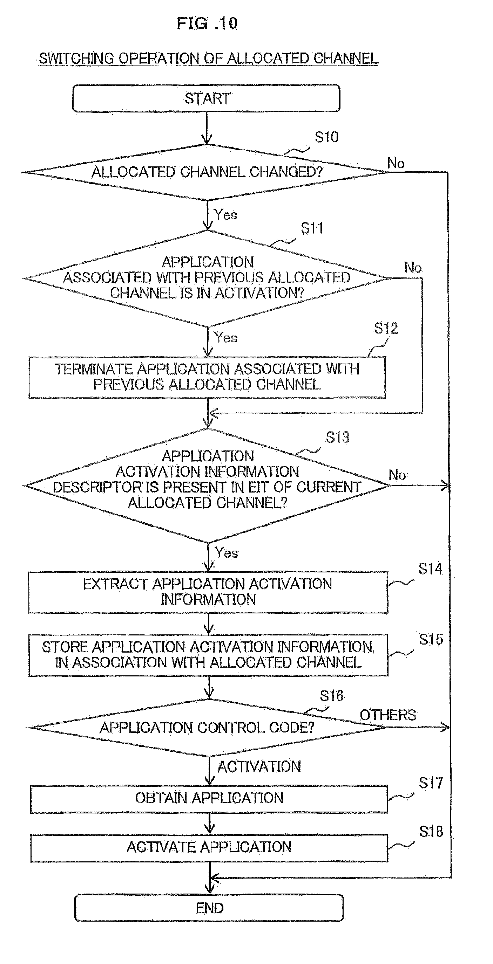

In the following, referring to FIG. 10 (FIG. 2 for configuration, as appropriate), allocated channel switching operation on the integrated broadcasting communications receiver 400A will be described.

As shown in FIG. 10, by the application management/execution controlling unit 409, the integrated broadcasting communications receiver 400A determines whether or not an allocated channel has been changed, based on a channel switching operation instruction that the integrated broadcasting communications receiver 400A is notified of by the operation controlling unit 414 (step S10).

If an allocated channel has been changed (Yes in step S10), the integrated broadcasting communications receiver 400A determines, by the termination controlling unit 409b, whether or not an application is activated in association with a previous allocated channel, referring to the activated application identification information storing unit 410 (step S11). Incidentally, if an allocated channel has not been changed (No in step S10), the integrated broadcasting communications receiver 400A terminates the allocated channel switching operation.

If an application is in activation in association with the previous allocated channel (Yes in step S11), the termination controlling unit 409b notifies the application execution unit 413 of an instruction to terminate this application (activation control instruction), and thus terminates the application (step S12).

In this situation, if a plurality of applications, which are activated in association with a previous channel, is present in the activated application identification information storing unit 410, the termination controlling unit 409b terminates all of these applications. For example, in case that the activation controlling unit 409b manages activated applications in the list format described referring to FIG. 7, the termination controlling unit 409b terminates the child application on the lowest layer in association with the previous channel, and deletes the structure corresponding to this application. The termination controlling unit 409b sequentially executes this operation, going back to the parent application, and thereby terminates all applications that are activated in association with the previous allocated channel.

On the other hand, if no application is activated in association with the previous channel (No in step S11), the integrated broadcasting communications receiver 400A proceeds the process to step S13.

Then, by the broadcast signal analysis unit 402, the integrated broadcasting communications receiver 400A analyzes stream data received and demodulated by the broadcast receiving unit 401, and determines whether or not the integrated broadcasting communications receiver 400A has been notified of application activation information, depending whether or not an application activation information descriptor is present in EIT corresponding to an allocated channel currently selected (step S 13).

If the integrated broadcasting communications receiver 400A has been notified of application activation information (Yes in step S13), the application activation information extracting unit 402a extracts the application activation information from EIT (step S14), and the application activation information storing unit 407 stores the extracted application activation information, associating it with an allocated channel specified by EIT (step S15).

On the other hand, if an application activation information descriptor is not present in EIT (No in step S13), the integrated broadcasting communications receiver 400A terminates the allocated channel switching operation.

The integrated broadcasting communications receiver 400A notifies, from the application activation information extracting unit 402a, the application management/execution controlling unit 409 of reception of the application activation information (activation information notification), and analyzes the control code of the application activation information (application control code) by the activation controlling unit 409a (step S16).

Herein, if the application control code is a code representing activation ('AUTOSTART') ('activation' in step S16), the integrated broadcasting communications receiver 400A obtains, by the application obtaining unit 411, an application that the integrated broadcasting communications receiver 400A has been notified of by the application activation information, via the communication transmitting/receiving unit 405 (step S17). Then, by the application execution unit 413, the integrated broadcasting communications receiver 400A activates the application obtained in step S17, upon an instruction from the activation controlling unit 409a (activation control instruction) (step S 18).

On the other hand, in case that the application control code is a code other than one that represents activation ('others' in step S16), the integrated broadcasting communications receiver 400 terminates allocated channel switching operation.

Incidentally, at the stage of step S16, if the integrated broadcasting communications receiver 400A is notified of all force termination ('KILLALL') as the application control code, all applications are terminated (not shown as a step).

When an allocated channel has been changed by the above-described operation, the integrated broadcasting communications receiver 400A can terminate applications, which are associated with the previous allocated channel, and activate applications, which are associated with a different allocated channel.

### [Operation of Obtaining Application Activation Information of Non-Associated-Application]

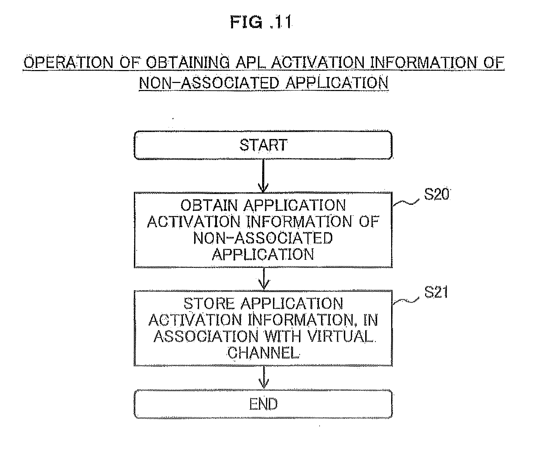

In the following, referring to FIG. 11 (refer to FIG. 2 for configuration, as appropriate), operation, which is performed on the integrated broadcasting communications receiver 400A, of obtaining application activation information corresponding to an application not linked with an allocated channel will be described.

At a time of power turning ON or when a list of applications is displayed by the list controlling unit 408, the integrated broadcasting communications receiver 400A obtains application activation information of an application (non-channel-associated application) not linked with an allocated channel, by the non-channel-associated information obtaining unit 406a of the application activation information obtaining unit 406, from a predetermined server (application activation information server 200 [see FIG. 1]), and via the communication transmitting/receiving unit 405 (step S20).

The integrated broadcasting communications receiver 400A writes and stores application activation information into the application activation information storing unit 407 by the non-channel-associated information obtaining unit 406a, associating the application activation information with a virtual channel (step S21).

Thus, the integrated broadcasting communications receiver 400A can also handle a non-channel-associated application similarly to a channel-associated application as if the non-channel-associated-application were an application linked with a virtual channel.

### [Installation Operation of Non-Associated Application]

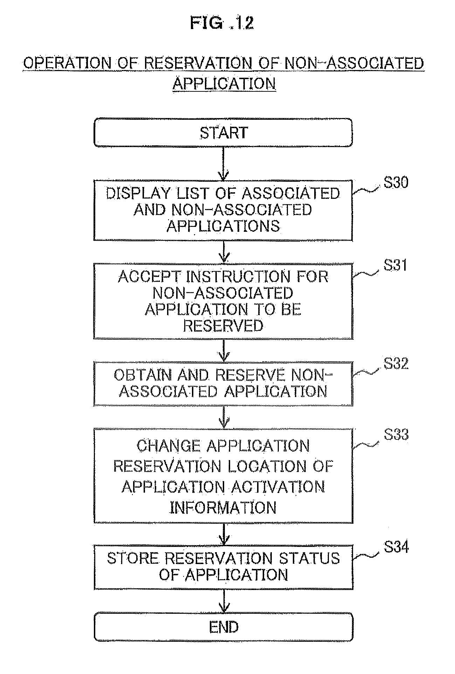

In the following, referring to FIG. 12 (FIG. 2 for configuration, as appropriate), operation, which is performed on the integrated broadcasting communications receiver 400A, of reserving (installing) application not linked with an allocated channel (Non-Channel-Associated Application) in the application storing unit 412 will be described.

Upon instruction by the user via the operation controlling unit 414 to display a list, the integrated broadcasting communications receiver 400A creates by the list displaying unit 408a a list of applications (channel associated application, non-channel associated application) corresponding to application activation information stored in the application activation information storing unit 407 and displays the list (step S30).

Then, the integrated broadcasting communications receiver 400A, by the list selecting unit 408b, accepts from the user via the operation controlling unit 414 an instruction to reserve a non-channel-associated application (step S31).

Then, the reservation managing unit 409c is notified of selection of an application including reservation, by the list selecting unit 408b (selected application notification), and the reservation managing unit 409c instructs the application obtaining unit 411 to obtain the designated application (application obtaining instruction). Then, the application obtaining unit 411 obtains the application (non-channel-associated application) via the communication transmitting/receiving unit 405, and writes the application into the application storing unit 412 (step S32).

Thereafter, the reservation managing unit 409c changes the location (address) of the application obtained by step S32, the address being stored in the application activation information storing unit 407, from the address on the network to the reservation location (local address), where the application has been reserved, in the application storing unit 412 (step S33). Further, at this moment, the reservation managing unit 409c stores, in the application activation information storing unit 407, the fact that this application has been reserved (step S34).

By the above-described operation, it is possible to reserve an application on the integrated broadcasting communications receiver 400A and activate the application at an arbitrary timing for the user and at a high speed.

### [Activation Operation of Application According to User Instruction]

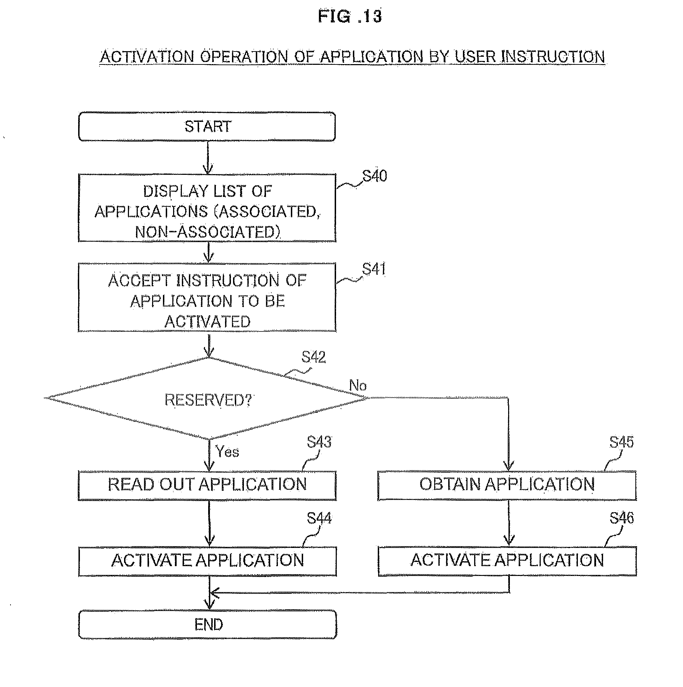

In the following, referring to FIG. 13 (referring to FIG. 2 for configuration, as appropriate), operation, by the integrated broadcasting communications receiver 400A, of activating an application that is linked with an allocated channel but does not automatically start or an application that is not linked with an allocated channel will be described.

Upon instruction by the user via the operation controlling unit 414 to display a list, the integrated broadcasting communications receiver 400A creates by the list displaying unit 408a a list of applications (channel associated application and non-channel associated application) corresponding to application activation information stored in the application activation information storing unit 407 and applications obtained from the application activation information server 200, and displays the list (step S40).

Concretely, referring to the application activation information storing unit 407, the list displaying unit 408a displays applications with an application control code 'PRESENT' among applications linked with an allocated channel and applications linked with a virtual channel, as a list of selectable applications. Incidentally, herein, the list displaying unit 408a displays a list of only applications with a listable flag (isListable, see FIG. 4) of TRUE ('1').

The integrated broadcasting communications receiver 400A, by the list selecting unit 408b, accepts an instruction from the user via the operation controlling unit 414 to activate an application (step S41).

Then, the list selecting unit 408b notifies the activation controlling unit 409a of the application to be activated (selected application notification), and the activation controlling unit 409a thereby determines whether or not the selected application is reserved in the application storing unit 412 (step S42). Incidentally, whether or not the application is reserved can be determined by whether the application reservation status stored in the application activation information storing unit 407 is 'reserved' or 'not reserved'.

Herein, if the selected application is reserved in the application storing unit 412 (Yes in step S42), the activation controlling unit 409a notifies the application execution unit 413 of an instruction to read the application from a local address described in the application activation information as the location of the application and activate the application.
Then, the application execution unit 413 reads out the application from the application storing unit 412 (step S43) and activates the application (step S44).

On the other hand, if the selected application is not reserved in the application storing unit 412 (No in step S42), the activation controlling unit 409a notifies the application execution unit 413 of an instruction to read out the application from a network address described in the application activation information as the location of the application and activate the application. Then, the application execution unit 413 obtains the application via the application obtaining unit 411 (step S45) and activates the application (step S46).

By the above-described operation, the integrated broadcasting communications receiver 400A can present and operate, at an arbitrary timing from the user, an application that is currently operable.

### <Second Embodiment>

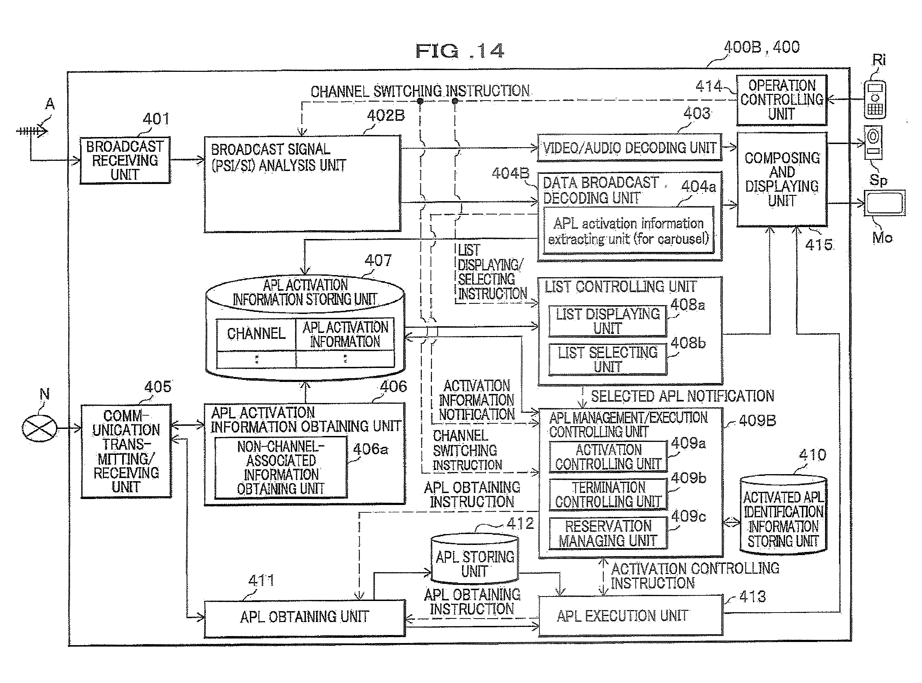

In the following, referring to FIG. 14 (referring to FIG. 1 for system configuration), the configuration of an integrated broadcasting communications receiver 400B (400) in a second embodiment will be described.

The integrated broadcasting communications receiver 400B in the second embodiment recognizes an application linked with an allocated channel by application activation information transmitted via broadcast wave W, based on DSM-CC (Digital Storage Media Command and Control) data carousel method.

Herein, the integrated broadcasting communications receiver 400B includes a broadcast receiving unit 401, a broadcast signal analysis unit 402B, a video/audio decoding unit 403, a data broadcast decoding unit 404B, a communication transmitting/receiving unit 405, an application activation information obtaining unit 406, an application activation information storing unit 407, a list controlling unit 408, an application management/execution controlling unit 409B, an activated application identification information storing unit 410, an application obtaining unit 411, an application storing unit 412, application execution unit 413, an operation controlling unit 414, and a composing and displaying unit 415.

Elements other than the broadcast signal analysis unit 402B, the data broadcast decoding unit 404B, and the application management/execution controlling unit 409B are the same as those of the integrated broadcasting communications receiver 400A described above with reference to FIG. 2. Accordingly, the same reference symbols will be assigned and description of these elements will be omitted.

The broadcast signal analysis unit 402B analyzes PSI/SI in stream data (transport stream) demodulated by the broadcast receiving unit 401, and extracts data including video, audio, data associated with a currently selected allocated channel.

The broadcast signal analysis unit 402B is configured by omitting the application activation information extracting unit 402a from the broadcast signal analysis unit 402 described above with reference to FIG. 2.

That is, the broadcast signal analysis unit 402B is the same as the broadcast signal analysis unit 402 (FIG. 2) with an exception of a function to extract application activation information from EIT and write the application activation information into the application activation information storing unit 407 and an exception of a function to notify the application management/execution controlling unit 409 of the fact that application activation information has been extracted. Accordingly, description will be omitted.

To specify an allocated channel of data carousel, as the broadcast signal analysis unit 402B herein recognizes the allocated channel in viewing, the broadcast signal analysis unit 402B is assumed to output the recognized 'original network identification', 'transport stream identification', and 'service identification' to the data broadcast decoding unit 404B.

The data broadcast decoding unit 404B decodes data of data broadcast extracted by the broadcast signal analysis unit 402B. The data broadcast decoding unit 404B has a function of a BML browser to decode a carousel, analyze BML, and convert this BML into a displayable format, and outputs the converted display data (data broadcast data) to the composing and displaying unit 415.

Further, herein, the data broadcast decoding unit 404B is provided with the application activation information extracting unit 404a.

The application activation information extracting unit 404a extracts application activation information, which is transmitted by carousel transfer, from the data in a section format extracted by the broadcast signal analysis unit 402. The application activation information extracting unit 404a sets the component tag and the module ID of the data carousel to predetermined values (for example, component tag: AA, module ID: 0000), detects that this carousel data is application activation information by the type (Type) descriptor of the module, and extracts the application activation information from the carousel data.

Incidentally, the application activation information extracting unit 404a detects that the application activation information has been updated, by that the module version has been updated, and extracts the application activation information at the timing of the updating.

The application activation information extracting unit 404a writes and stores the extracted application activation information into the application activation information storing unit 407, associating the application activation information with channel identification information ('original network identification', 'transport stream identification', and 'service identification') that the application activation information extracting unit 404a is notified of by the broadcast signal analysis unit 402B to specify an allocated channel.

Further, when the application activation information extracting unit 404a has extracted application activation information, the application activation information extracting unit 404a notifies the application management/execution controlling unit 409B of the fact, together with information for identifying an application(Application ID), that the application activation information extracting unit 404a has been notified of the application activation information (activation information notification).

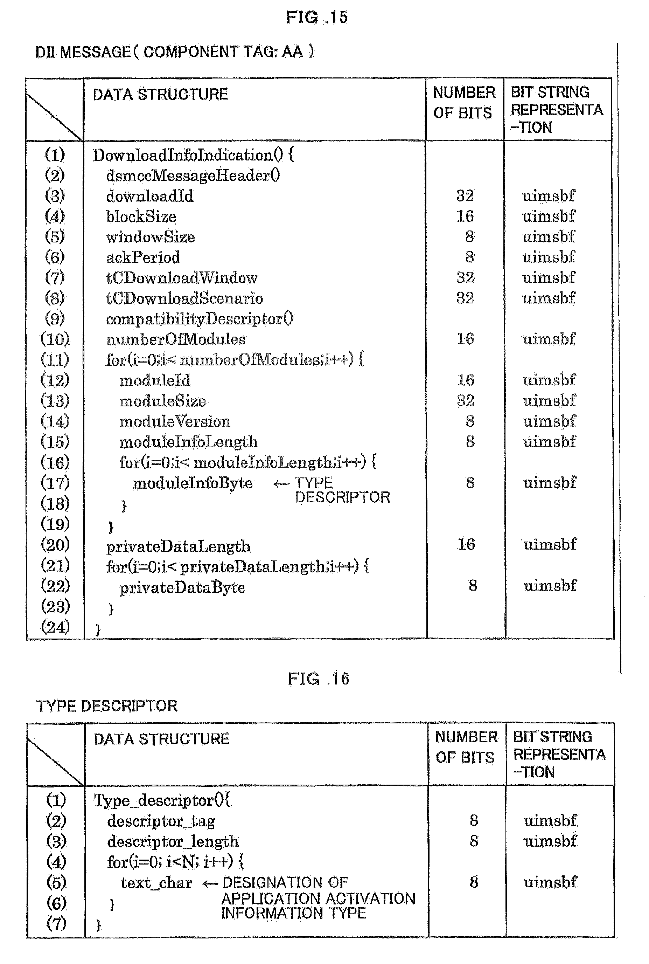

Herein, referring to FIGS. 15 to 17, the data structures of a DII message and a DDB message that transmit application activation information as a data carousel will be described.

Incidentally, as the data structures of the DII message and the DDB message are specified by ARIB STD-B24, details of them will not be described here, and only data related to transmission of application activation information will be described.

In the DII message shown in FIG. 15, a module ID for specifying a module is described on line 12, and the version of module is described on line 14. Lines 16 to 18 are a storage area for a type descriptor indicating that the carousel data is application activation information.

Concretely, this Type descriptor describes a value for designating a type unique to application activation information on lines 4 to 6 in FIG. 16, in a data structure as shown in FIG. 16.

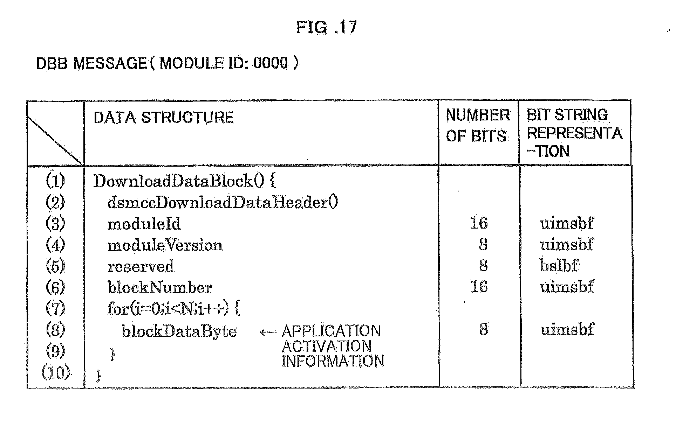

Further, as shown in FIG. 17, the application activation information is disposed, being divided on lines 7 to 9 in the DDB message. The number of divisions of this application activation information is specified by the number of modules (on line 10) of the DDI message in FIG. 15.

Incidentally, herein, although the carousel data is identified as application activation information by describing a Type descriptor in the DII message, it is not necessary to describe a Type descriptor if the values of the component tag and the module ID are values that uniquely specify application activation information.

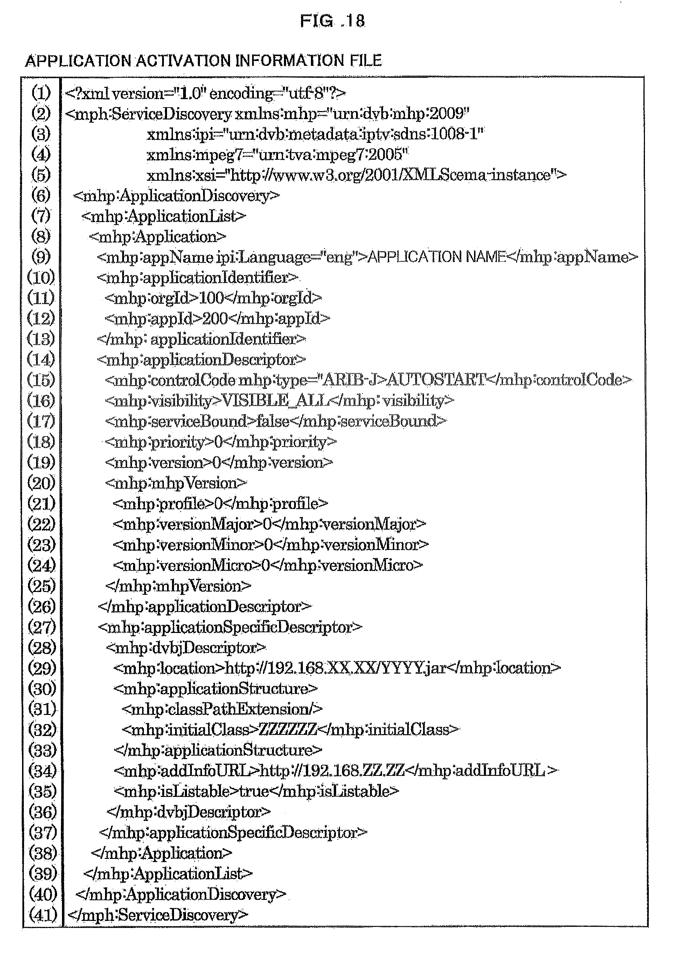

In the following, referring to FIG. 18, application activation information transmitted by a data carousel will be described. FIG. 18 is a diagram showing an example of an application activation information file that describes application activation information by texts in XML format.

The content of the application activation information file described by texts, shown in FIG. 18, includes basically the same content as the content of the application activation information described above with reference to FIG. 4.

As information for specifying an application, there is the following information. For example, in FIG. 18, an application name is described on line 9. Further, an organization that created the application is described on line 11, and numbers for identifying an application that is uniquely set in the organization is described on line 12. The numbers described on lines 11 and 12 are an application ID that uniquely specifies an application.

Further, the location (address) of the application is described on line 29. Further, in addition to these, additional information used by the application, for example, the location (address) of metadata, image data or the like may be described, as shown on line 34.

As additional information for controlling an application, there is the following information. For example, in FIG. 18, a control code (application control code) for controlling the state of an application is described on line 15. Further, information (listable flag [isListable]) representing whether or not this application is selectable for the user is described on line 35 in FIG. 18.

Incidentally, herein, application activation information transmitted by a data carousel is data expressed by texts, however, the data may be expressed by binary expression, as shown in FIG. 4.

Returning to FIG. 14, the configuration of the integrated broadcasting communications receiver 400B will be continuously described.

The application management/execution controlling unit 409B controls the life cycle of an application (the process from loading an application, through execution, and until termination), and has a configuration which is the same as that of the application management/execution controlling unit 409 described-above with reference to FIG. 2. The application management/execution controlling unit 409B is different from the application management/execution controlling unit 409 only in that the origin of notification of application activation information is changed from the application activation information extracting unit 402a (see FIG. 2) to the application activation information extracting unit 404a.

In such a manner, the integrated broadcasting communications receiver 400B can transmit application activation information by an existing data carousel method without multiplexing the application activation information to ES.

Incidentally, the operation of the integrated broadcasting communications receiver 400B is basically the same as the operation described above with reference to FIGS. 8 to 13 with an only difference in that whether application activation information is extracted from EIT or a data carousel, and description will be accordingly omitted.

### <Third Embodiment>

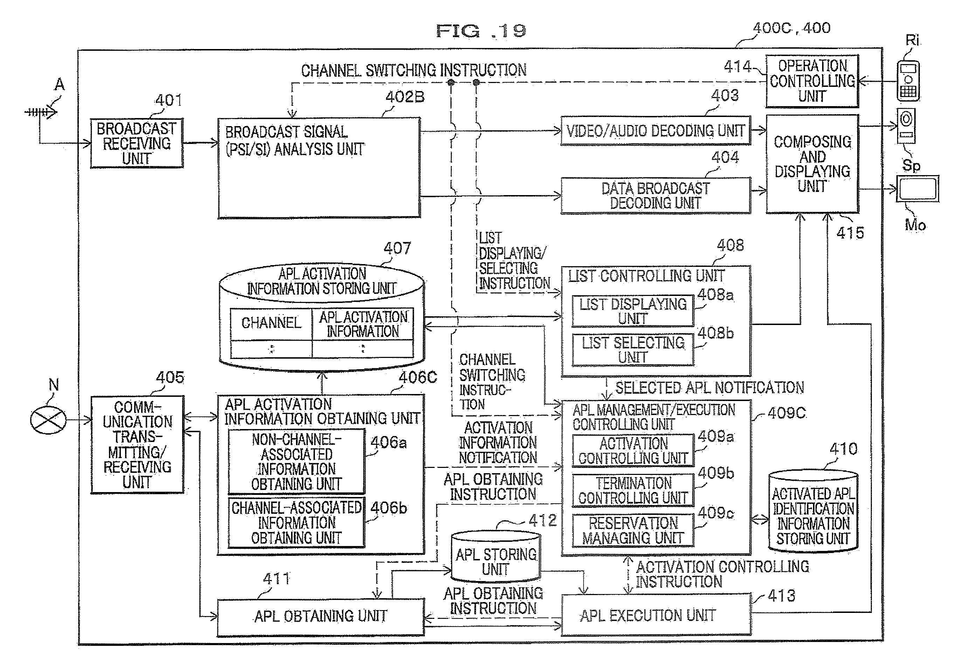

In the following, referring to FIG. 19 (referring to FIG. 1 for system configuration), the configuration of an integrated broadcasting communications receiver 400C (400) in a third embodiment will be described.

The integrated broadcasting communications receiver 400C in the third embodiment recognizes an application linked with an allocated channel, by application activation information transmitted via communication line N.

Herein, the integrated broadcasting communications receiver 400C includes broadcast receiving unit 401, broadcast signal analysis unit 402B, video/audio decoding unit 403, data broadcast decoding unit 404, communication transmitting/receiving unit 405, application activation information obtaining unit 406C, application activation information storing unit 407, list controlling unit 408, application management/execution controlling unit 409C, activated application identification information storing unit 410, application obtaining unit 411, application storing unit 412, application execution unit 413, operation controlling unit 414, and composing and displaying unit 415.

Elements other than the application activation information obtaining unit 406C and the application management/execution controlling unit 409C are the same as those of the integrated broadcasting communications receivers 400A and 400B described above with reference to FIG. 2 and FIG. 14. Accordingly, the same reference symbols will be assigned and description of these elements will be omitted.

The application activation information obtaining unit 406C obtains application activation information via the communication transmitting/receiving unit 405. Herein, the application activation information obtaining unit 406C is provided with non-channel-associated information obtaining unit 406a and a channel-associated information obtaining unit 406b.

The non-channel-associated information obtaining unit 406a is the same as that of the integrated broadcasting communications receiver 400A described with reference to FIG. 2, and description will be accordingly omitted.

The channel-associated information obtaining unit 406b obtains application activation information of an application (channel-associated application) linked with an allocated channel via the communication transmitting/receiving unit 405.

The channel-associated information obtaining unit 406b obtains application activation information from a server (for example, the application activation information server 200 in FIG. 1) that delivers application activation information.

It is assumed that the integrated broadcasting communications receiver 400C is notified of this delivery of application activation information, from the application activation information server 200 by a push notification.

In this case, the server that delivers application activation information via communication line N is desirably a server managed by the broadcast station so as to activate an application linked with an allocated channel. Incidentally, the channel-associated information obtaining unit 406b notifies in advance the server, which delivers application activation information, of the network address (IP address) of the integrated broadcasting communications receiver 400C, and makes a request to the server to receive push notification.

Information (channel identification information) for specifying an allocated channel with which this application is linked is further added to the application activation information that the server is notified of by this push notification, besides information for specifying an application, such as the identifier (application ID) of the application, the location (address) of the application and the like, and additional information (application control code) for controlling this application.

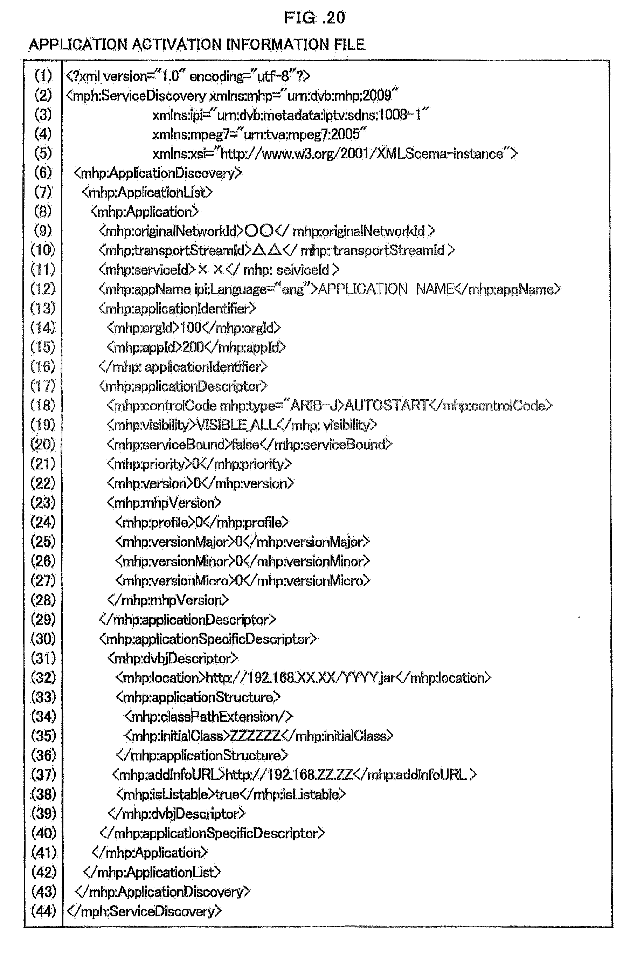

Herein, referring to FIG. 20, the contents of application activation information, to which information for specifying an allocated channel has been added, will be described. FIG. 20 shows basically the same as the application activation information file, described above with reference to FIG. 18, in which application activation information is described. However, there is a difference in that information for identifying an allocated channel is added on lines 9 to 11 in FIG. 20.

The original network ID (originalNetworkId) described on line 9 is an identifier for identifying a broadcast network such as digital terrestrial broadcast, BS digital broadcast, or the like. The transport stream ID (transportStreamId) described on line 10 is an identifier for identifying a transport stream (TS). The service ID (serviceID) described on line 11 is an identifier for identifying an allocated channel for an individual transport stream. These pieces of information are the same as 'original network identification', 'transport stream identification', and 'service identification' for identifying an allocated channel in EIT descried above with reference to FIG. 3.

By adding these pieces of information, even in a case that the server is notified of application activation information via communication line N, it is possible to link an application specified by this application activation information with an allocated. service.

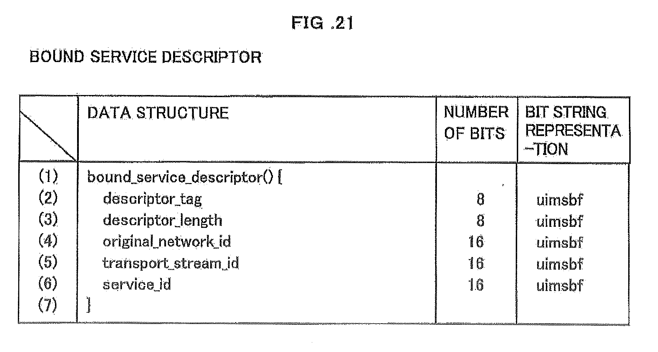

Incidentally, herein, as shown in FIG. 20, an example of describing application activation information in an application activation information file expressed by texts in XML format is described, however, the application activation information may be described in binary format. For example, application activation information may be linked with an allocated service, by adding a descriptor (bound service descriptor) including an original network ID (original_network_id), a transport stream ID (transport_stream_id), and a service ID (service_id) as shown in FIG. 21. Returning to FIG. 19, the configuration of the integrated broadcasting communications receiver 400C will be continuously described.

The channel-associated information obtaining unit 406b obtains application activation information (see FIG. 20) with added information (channel identification information) for specifying an allocated channel and writes the application activation information into the application activation information storing unit 407.

Incidentally, although this application activation information already includes channel identification information, this application activation information is desirably managed in a data structure that is the same as a data structure, which is obtained by the non-channel-associated information obtaining unit 406a and stored in the application activation information storing unit 407. Accordingly, herein, as described above with reference to FIG. 6, the channel-associated information obtaining unit 406b writes and stores the obtained application activation information into the application activation information storing unit 407, associating the application activation information with a channel (channel identification information).

Further, when the channel-associated information obtaining unit 406b has obtained application activation information, the channel-associated information obtaining unit 406b notifies the application management/execution controlling unit 409C of the fact that the channel-associated information obtaining unit 406b has been notified of application activation information (activation information notification) together with information for identifying an application (application ID).

The application management/execution controlling unit 409C controls the life cycle of an application (the process from loading an application, through execution, and until termination), and has a configuration which is the same as that of the application management/execution controlling unit 409 described-above with reference to FIG. 2. The application management/execution controlling unit 409C is different from the application management/execution controlling unit 409 only in that the origin, which is notified of application activation information as activation information notification, is changed from the application activation information extracting unit 402a (see FIG. 2) to the channel-associated information obtaining unit 406b

In such a manner, the integrated broadcasting communications receiver 400C can obtain application activation information via communication line N without multiplexing the application activation information on a broadcast wave.

Incidentally, the operation of the integrated broadcasting communications receiver 400C is basically the same as the operation described above with reference to FIGS. 8 to 13 with an only difference in that whether application activation information is extracted from EIT or obtained by communication line N, and description will be accordingly omitted.

The configurations of integrated broadcasting communications receivers 400 have been described above with examples of the first to third embodiments, however, the configuration of an integrated broadcasting communications receiver 400 is not limited to these embodiments.

In the above, in the first to third embodiments, the integrated broadcasting communications receivers 400 have been described with configuration to extract application activation information linked with an allocated channel from a descriptor of an EIT, configuration to extract the application activation information from data of a data carousel, and configuration to obtain the application activation information via communication line N, however, these may be combined for configuration.

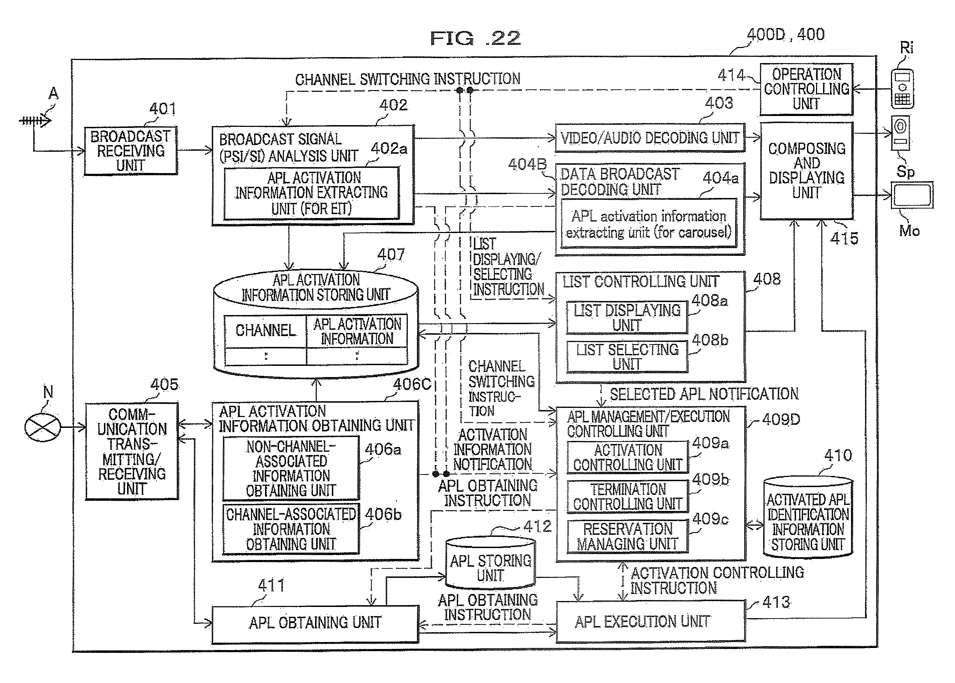

For example, as shown in FIG. 22, an integrated broadcasting communications receiver 400D may be configured to include an application activation information extracting unit 402a, an application activation information extracting unit 404a, and a channel-associated information obtaining unit 406b. In this case, an application management/execution controlling unit 409D can perform lifecycle control of an application, by being notified of notifications (activation information notification) of having obtained the application, respectively by the application activation information extracting unit 402a, the application activation information extracting unit 404a, and the channel-associated information obtaining unit 406b.

Further, in the integrated broadcasting communications receivers 400 (400A to 400D) shown in FIG.2 and the like, the broadcast signal analysis unit 402 (402B) may, similarly to conventional cases, have a function to extract application activation information from an application information table (AIT) that is multiplexed to a transport stream in a section format as an elementary stream (ES) for a broadcast program.

Further, in the integrated broadcasting communications receiver 400B in the second embodiment in FIG. 14, in extracting application activation information linked with an allocated channel from a data carousel, information for specifying an allocated channel in current receiving is obtained by the broadcast signal analysis unit 402B, however, it is also possible to extract information for specifying an allocated channel by the application activation information extracting unit 404a, using an application activation information file shown in FIG. 20.

Incidentally, the functions of an integrated broadcasting communications receiver 400 (400A to 400D) in the above described embodiments may be realized by a computer.
That is, an integrated broadcasting communications receiver 400 can make a computer operate by programs that function as the above-described respective units.

In this case, the programs can be made function by recording the programs in a computer readable recording medium, making a computer system read the programs recorded in the recording medium and execute the programs.

Incidentally, 'a computer system' herein is assumed to include an OS and hardware such as peripheral devices and the like. Further, by adopting a multitask OS as the above-described OS, the respective functions may be operated in parallel.

Still further, 'a computer readable recording medium' herein refers to a movable medium, such as a flexible disk, a photomagnetic disk, a ROM, a CD-ROM or the like, or a storage device, such as a hard disk built in a computer system.

Yet further, 'a computer-readable recording medium' herein may include one that dynamically holds programs for a short time, such as a communication line in a case of transmitting a program via a network, Internet for example, or a telephone communication line or the like, and one that holds programs for a certain time such as a volatile memory in a computer system being a server or a client in this case. Further, such a program may be one for implementing a part of the above-described functions, and may be one that can implement the above-described functions by a combination with a program that is already recorded in a computer system.

### Reference Symbols

S: integrated broadcasting communications system
100: broadcast transmitting apparatus
200: application activation information server
300: application server
400: integrated broadcasting communications receiver
401: broadcast receiving unit
402: broadcast signal analysis unit
402a: application activation information extracting unit
403: video/audio decoding unit
404: data broadcast decoding unit
404a: application activation information extracting unit
405: communication transmitting/receiving unit
406: application activation information obtaining unit
406a: non-channel-associated information obtaining unit
406b: channel-associated information obtaining unit
407: application activation information storing unit
408: list controlling unit
408a: list displaying unit
408b: list selecting unit
409: application management/execution controlling unit
409a: activation controlling unit
409b: termination controlling unit
409c: reservation managing unit
410: activated application identification information storing unit
411: application obtaining unit
412: application storing unit
413: application execution unit
414: operation controlling unit
415: composing and displaying unit
W: broadcast wave
N: communication line

## Claims

1. An integrated broadcasting communications receiver having a broadcast receiving unit for receiving broadcast data via a broadcast wave and a communication transmitting/receiving unit for transmitting/receiving communication data via a communication line wherein the integrated broadcasting communications receiver controls activation of an application linked with an allocated channel of broadcast, integrated broadcasting communications receiver comprising:
an application activation information extracting unit for extracting application activation information including an address for specifying location of the application and a control code for controlling activation of the application, from an event information table included in the broadcast data received via the broadcast receiving unit;
an application activation information storing unit for storing the application activation information, associating the application activation information with an allocated channel in the event information table;
an application obtaining unit for obtaining the application as the communication data via the communication transmitting/receiving unit;
an application execution unit for executing the application;
an activation controlling unit for
controlling the application obtaining unit to obtain, from the address, the application on which activation has been instructed by the control code in the application activation information corresponding to an allocated channel that is currently selected, the application activation information being stored in the application activation information storing unit, and controlling the application execution unit to activate the obtained application, and
a termination controlling unit for controlling the application execution unit to terminate the application on which termination has been instructed by the control code.

2. The integrated broadcasting communications receiver according to claim 1,
wherein the application activation information is added to a descriptor area of the event information table, as an application activation information descriptor,
and wherein the application activation information extracting unit extracts the application activation information from the application activation information descriptor added to the descriptor area.

3. The integrated broadcasting communications receiver according to claim 1,
wherein the event information table is a p/f EIT,
and wherein the application activation information extracting unit extracts the application activation information from the p/f EIT of the broadcast data.

4. An integrated broadcasting communications receiver having a broadcast receiving unit for receiving broadcast data via a broadcast wave and a communication transmitting/receiving unit for transmitting/receiving communication data via a communication line wherein the integrated broadcasting communications receiver controls activation of an application linked with an allocated channel of broadcast, the integrated broadcasting communications receiver comprising:
an application activation information extracting unit for extracting application activation information including an address for specifying location of the application and a control code for controlling activation of the application, from data of a data carousel specified by a component tag and a module that are included in the broadcast data received via the broadcast receiving unit and are predetermined;
an application activation information storing unit for storing the application activation information, associating the application activation information with an allocated channel in the data carousel;
an application obtaining unit for obtaining the application as the communication data via the communication transmitting/receiving unit;
an application execution unit for executing the application;
an activation controlling unit for
controlling the application obtaining unit to obtain, from the address, the application on which activation has been instructed by the control code in the application activation information corresponding to an allocated channel that is currently selected, the application activation information being stored in the application activation information storing unit, and controlling the application execution unit to activate the application, and
a termination controlling unit for controlling the application execution unit to terminate the application on which termination has been instructed by the control code.

5. The integrated broadcasting communications receiver according to claim 1 or 4, further comprising:
an activated application identification information storing unit for storing identification information for identifying the application activated in linkage with the allocated channel, associating the identification information with the allocated channel,
wherein when the allocated channel has been switched, the termination controlling unit controls the application execution unit to terminate the application in association with the allocated channel before the switching, the application being stored in the activated application identification information storing unit.

6. The integrated broadcasting communications receiver according to claim 1 or 4, further comprising:
a list displaying unit for displaying a list of an application/applications on which activatability has been instructed by the control code, with reference to the application activation information being stored in the application activation information storing unit and associated with the currently selected allocated channel; and
a list selecting unit for instructing the activation controlling unit to activate an application selected by the list.

7. The integrated broadcasting communications receiver according to claim 1 or 4, further comprising:
an activated application identification storing unit for storing a piece of identification information for identifying a parent application that is activated in association with the allocated channel and a piece of identification information for identifying a child application that is activated by the parent application itself, linking the pieces of identification information with each other,
wherein the activation controlling unit writes the identification information of the activated child application into the activated application identification information unit, in linkage with the parent application,
and wherein when the termination controlling unit terminates the parent application activated in association with the allocated channel, the termination controlling unit terminates the child application linked with the parent application.
